Europäisches Patentamt

European Patent Office

Office européen des brevets

(11) Veröffentlichungsnummer : **0 129 892**
**B1**

(12) **EUROPÄISCHE PATENTSCHRIFT**

(45) Veröffentlichungstag der Patentschrift :
04.03.87

(51) Int. Cl.⁴ : **A 23 L   1/16**

(21) Anmeldenummer : **84107222.6**

(22) Anmeldetag : **23.06.84**

(54) **Verfahren zur Herstellung von langen Teigwaren und Vorrichtung zur Durchführung eines solchen Verfahrens.**

(30) Priorität : **24.06.83 CH 3459/83**
**05.01.84 DE 3400300**

(43) Veröffentlichungstag der Anmeldung :
**02.01.85 Patentblatt 85/01**

(45) Bekanntmachung des Hinweises auf die Patenterteilung : **04.03.87 Patentblatt 87/10**

(84) Benannte Vertragsstaaten :
**AT BE CH DE FR IT LI**

(56) Entgegenhaltungen :
**EP-A- 0 061 152**
**CH-A-   351 901**
**CH-A-   383 747**
**CH-A-   469 237**
**DE-B- 1 009 909**
**FR-A- 1 546 693**
**FR-A- 2 368 000**
**GB-A- 2 068 870**

(73) Patentinhaber : **Gebrüder Bühler AG**

**CH-9240 Uzwil (CH)**

(72) Erfinder : **Manser, Josef**
**Kamorstrasse 1**
**CH-9240 Uzwil (CH)**
Erfinder : **Egger, Friedrich**
**Eichweidstrasse 30**
**CH-9244 Niederuzwil (CH)**
Erfinder : **Seiler, Werner**
**Weiern**
**CH-9523 Züberwangen (CH)**

(74) Vertreter : **Hagemann, Heinrich, Dr. et al**
**Patentanwälte GEYER, HAGEMANN & KEHL Postfach 860329**
**D-8000 München 86 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Langwaren eines Feuchtigkeitsgehaltes von weniger als 14 Gew.-%, insbesondere von 11 bis 13 Gew.-%, wobei die einen Pressenkopf in Form von weichen, feucht-plastischen Teigsträngen verlassende Langware hängend bis zur Endtrocknung durch unterschiedlich aufgeheizte Klimazonen geführt und die Langware nach Abschluß des Trocknungsvorganges in einer weiteren Klimazone abgekühlt und/oder formstabilisiert wird.

Teigwaren, insbesondere lange Teigwaren bzw. Langwaren sind heute neben Rohgetreide bzw. Brot die verbreitesten Grundnahrungsmittel, die insbesondere auch zur Vorratshaltung in größerem Umfange benutzt werden. Sie sind kochfertige, trockene Getreideerzeugnisse, die aus Weizengrieß-, Dunst- oder Mehlteigen ohne Anwendung eines Gär- oder Backverfahrens durch Formen und schonendes Trocknen hergestellt werden. Nach den Rohstoffen unterscheidet man Eierteigwaren und eifreie Teigwaren sowie Grieß- und Mehlteigwaren, nach ihrer äußeren Form Nudeln (Band-, Schnitt- und Fadennudeln), Spätzle, Makkaroni (Röhrennudeln) und Spaghetti. Die Hauptrohstoffe der Teigwaren sind Durumweizengrieße oder -dunste, die gleichbleibende Kornverteilung, hohen Proteingehalt, hohen Gehalt an gelben Pigmenten (Xanthophyll bzw. dessen Ester) und gute Pigmentstabilität bei geringer Neigung zu grau-bräunlicher Verfärbung aufweisen sollen.

Zur Herstellung von Teigwaren werden aus den Getreiderohstoffen — Grieß oder Dunst, meist in Mischung miteinander, bei ungünstiger Versorgungslage auch Mehl — unter Zugabe von 26 bis 32 % Wasser, eventuell Salz, Ei für Diätteigwaren auch Kleber und von anderen Proteinpräparaten Teige bereitet und des weiteren durch Pressen oder Walzen und Schneiden geformt und schließlich getrocknet. Wassermenge, Wassertemperatur, Misch- oder Knetzeit sowie die Trocknungsführung richten sich nach der Art der Rohstoffgemische, dem Fabrikationsprinzip und den Besonderheiten des Maschinenparks. Die frisch geformte Teigware enthält durchschnittlich etwa 31 % Feuchtigkeit, die fertig getrocknete und abgepackte Ware nur noch 11 bis 13 %. -

Beim oben erwähnten Pressen kann grundsätzlich nach zwei Verfahrensweisen vorgegangen werden : a) nach dem älteren Chargenverfahren mit der Herstellung homogener, plastischer Teige in einem Vorkneter und Kollergang (Gramola) und Formung in hydraulischen Pressen oder b) nach dem modernen kontinuierlichen Verfahren mit sogenannten Schneckenpressen, bei dem im ersten Abschnitt kein homogener Teil geknetet, sondern in Trögen mit Mischpaddelwerken zunächst lediglich eine Teigkrümmelmasse gebildet wird, die dann Transportschnecken langsam weiterleiten und dem Pressenkopf zuführen. Erst die Scherkräfte in der Auspreßschnecke sowie die hohen Drücke von 100 bis 150 bar, die in der Pressenkammer und während des Durchganges des Teiges durch die Matrize selbst herrschen, bewirken das notwendige Homogenkneten oder « Verleimen » des Teiges. Der homogenisierte geknetete, feucht-plastische Teig wird aus der Matrize in Form eines stetigen Stroms fertig geformter und in der Struktur stark verdichteter Teigstränge ausgepreßt. Ein Gebläse trocknet sofort die austretenden Teigstränge oberflächlich ab, um ihnen die Klebrigkeit zu nehmen. Direkt unterhalb der Matrize können rotierende Messer angeordnet sein, mit denen die vorgeformten Stränge zur gewünschten Länge geschnitten werden. Die derartig erhaltenen Stränge müssen dann zur Herstellung einer Dauerware getrocknet werden, wobei die Trocknung von außen nach innen fortschreitet. Dabei ist es wichtig, daß die Oberfläche nicht übermäßig vor dem Kern erhärtet, um Risse und Sprünge in der fertigen Teigware zu vermeiden. Die frisch geformte Teigware besitzt bereits den erwähnten Wassergehalt von etwa 31 %. Durch die oberflächliche Trocknung nach Austritt aus dem Pressenkopf geht kaum 1 % Wasser verloren.

Die Steuerung des Trocknungsverlaufes beruht im Prinzip auch heute noch auf den Erfahrungen, die ursprünglich im Mittelmeerraum beim Trocknen im Freien unter den dort naturgegebenen zyklischen Veränderungen von Luftbewegung, -temperatur und -feuchtigkeit gewonnen worden sind. Die Trocknungszeit bei diesem Trocknungsverfahren von der Formung bis zur Erlangung des Endfeuchtigkeitsgehaltes der Teigware betrug 3 bis 5 Tage. Dies galt sowohl für kurze wie auch lange Teigwaren.

Im Zuge der industriellen Herstellung wurden die oben geschilderten natürlichen Bedingungen der Trocknung so weit wie möglich nachgeahmt, wobei stets eine Verfahrensoptimierung, insbesondere eine Beschleunigung des Trocknungsprozesses angestrebt wurde. Hierbei traten vielfältige Probleme in Erscheinung. So ist das Trocknen des geformten Teiges der letzte und technisch problemreichste Abschnitt der Teigwarenherstellung, insbesondere in Form langer Teigwaren. Es kommt im Prinzip darauf an, den Wasserentzug so zu steuern, daß die Trocknung von außen nach innen so fortschreitet, daß die Oberfläche nicht vor dem Kern erhärtet, um Risse und Sprünge in der fertigen Teigware zu vermeiden. Das heißt, die Oberfläche soll nicht vor dem Kern erhärten und das Feuchtigkeitsgefälle zwischen den Schichten soll begrenzt bleiben. Ein zu scharfes Trocknen bei hoher Temperatur, niedriger relativer Luftfeuchtigkeit und starker Luftumwälzung verursacht Schwindungsspannungen, die später Risse und Sprünge sowie ein Zerfallen der trocknen Teigwaren oder ein Zerfallen beim Kochen in Stücke hervorrufen. Zu langsames Trocknen bei mittleren Temperatur, hoher relativer Luftfeuchtigkeit und schwacher Luftumwälzung führt zum Zerdehnen der auf Stäben hängenden langen Teigwaren. Dieses langsame Trocknen kann Säuerung zur Folge haben.

Es ist erkennbar, daß bei einer Optimierung des Trocknens von Langwaren vielfältige Gesichtspunkte beachtet werden müssen.

Bis vor zirka einem bis zwei Jahrzehnten galt eine Langware nur dann als qualitativ einwandfrei, wenn die Trocknungstemperatur 50 °C nicht überstieg und die Trocknungsdauer mindestens 18 bis 24 Std. betrug. In jüngster Zeit wird im allgemeinen etwa wie folgt vorgegangen : die aus der Presse austretenden Langwaren durchlaufen zunächst in einer Art Meanderführung kontinuierlich einen Vortrockner. In der Phase sinkt der Wassergehalt innerhalb 1 bis 3 Std recht steil auf 20 bis 24 % ab, d. h. in den kritischen Bereich des Übergangs der Teigwaren vom plastischen in den festen Zustand. An dieser Grenze wird eine mehrstündige Schwitzperiode eingeschaltet, während der das behandelte Gut Trocknerzonen ohne Feuchtigkeitsentzug durchwandert. Dabei kann sich das Restwasser gleichmäßig vom Kern her über den gesamten Querschnitt der einzelnen Formstücke verteilen. Die sich anschließende Endtrocknung erfolgt langsamer und schonender als die Vortrocknung bis zu einem Feuchtigkeitsgehalt von 11 bis 13 %. Die warme, trockene Langware kann dann noch auf den Stäben in Vorratssilos laufen, wo sie mehrere Stunden, eventuell über Nacht, verbleibt, um im Feuchtigkeitsgleichgewicht mit 55 bis 65 % relativer Feuchtigkeit bei Raumtemperatur oder wenig darüber Restspannungen abzubauen. Die derartig « stabilisierte », d. h. weniger druckgefährdete Fertigware wird anschließend den Verpackungsmaschinen zugeführt.

Nach dem gegenwärtig praktizierten Stand der Technik erfolgt die Trocknung während 8 bis 12 Std bei einer Temperatur von 70 bis 75 °C. Zwar erwähnt die CH-A-303 652 auch eine Behandlungstemperatur bis zu 110 °C. Dieses bekannte Verfahren wird jedoch derartig gesteuert, daß eine Verkleisterung der Teigware eintritt. Diese führt u. a. zu einer Qualitätseinbuße. Wegen der aufgezeigten Problematiken bei höherer Temperatur ist demzufolge bis heute kein Verfahren bekannt, das eine Trocknung bei höheren Temperaturen und kurzen Trocknungszeiten ermöglicht, da eine Steigerung der Temperaturen bisher stets zu Qualitätseinbußen führte, insbesondere hinsichtlich des Aussehens der Ware (Farbe, Oberflächenbeschaffenheit). Eine hohe Trocknungstemperatur erschien aber auch aus folgenden Gründen nicht empfehlenswert : bei Verweilzeiten der Langwaren von 8 bis 12 Std im Trockner wirken sich Störungen z. B. des Transportsystems verhängnisvoll aus. So kann nicht nur eine ganze Tagesproduktion von 15 bis 20 t Teigwaren bei größeren Anlagen unbrauchbar werden. Vielmehr muß die ganze Teigwarenmasse von den einzelnen Stäben der Transportvorrichtung einzeln von Hand abgenommen werden. Bei höheren Temperaturen müßte daher die gesamte Anlage vor der Behebung einer mechanischen Störung im Inneren zunächst auf eine erträgliche Temperatur abkühlen.

Gerade in jüngster Zeit sind nun verschiedene Versuche zur Optimierung der Herstellung langer Teigwaren durchgeführt worden. Wie bei vielen Vorgängen in der Natur was das bisherige schrittweise Herantasten an eine andere technische Lösung schon allein deshalb äußert schwierig oder gar zum Scheitern verurteilt, weil zu viele Einflußparameter bedacht werden mußten und aus systematischen Gründen pro Versuch nur jeweils ein oder zwei Parameter verändert werden durften. Der optimale Punkt lag daher oft überraschend weit von der gängigen Praxis weg. Alle dazwischenliegenden Variationen der Parameter führten jeweils nur zu schlechteren Ergebnissen. Für Langwaren wurden daher bis heute 80 °C zur Erzielung qualitativ hochwertiger Erzeugnisse wie eine Schallmauer betrachtet, die zu überschreiten nur als nachteilig angesehen wurde. Das wurde darauf zurückgeführt, daß das Klebereinweiß, das 70 bis 80 % des Gehaltes an Eiweiß ausmachen kann, mit jeder Steigerung der Temperatur noch weitergehender denaturiert wurde. Dies ließ sich durch Löslichkeitstests, z. B. mit verdünnter Essigsäure, nachweisen. Die Koagulation des Eiweißes schreitet bei Temperatur über 50 bis 60 °C rasch voran. Bei den vielfältigen Versuchen der Praxis, Temperaturen über 60 °C zu überschreiten, wurden stets mangelhafte Produkte erzielt. Personen mit ganz besonders differenziertem geschmacklichem Beurteilungsvermögen gaben nämlich an, daß Langware ein gummiartiges Verhalten beim Beißen zeigt. Schließlich wurde niedriger Säuregrad festgestellt. Der Konsument lehnte daher derartig hergestellte Langwaren ab. Welches die entscheidenden Kriterien waren, die bisher die Einführung eines Verfahrens zur Trocknung und Herstellung qualitativ hochwertiger und insbesondere farblich einwandfreier Langwaren in einem Temperaturbereich von 80 bis 100 °C ausschlossen, ist nicht mehr feststellbar.

Der Erfindung lag die Aufgabe zugrunde, das eingangs beschriebene Verfahren so zu verbessern, daß es weitestgehend störungsfrei in einfacher und wirtschaftlicher Weise und insbesondere schnell unter Beibehaltung der an das Verfahrensprodukt zu richtenden qualitativen Anforderungen durchführbar ist. Des weiteren soll die Erfindung eine zur Durchführung dieses Verfahrens besonders geeignete Vorrichtung vorschlagen.

Erfindungsgemäß wird diese Aufgabe dadurch gelöst, daß die den Pressenkopf verlassende Langware in einer ersten Klimazone möglichst schnell, jedoch in mehr als 10 min und unter Einwirkung eines Aufheizmediums einer relativen Feuchtigkeit von 60 bis 80 % auf eine Temperatur von mehr als 80 °C aufgeheizt und darauf in einer zweiten Klimazone unter Einwirkung eines Trocknungsmediums einer Temperatur von über 80 °C und einer relativen Feuchtigkeit von 65 bis 85 % auf eine Feuchtigkeit von weniger als 14 Gew.-% oder zur Vermeidung unerwünschter Reaktionen über 80 °C zunächst auf einen Feuchtigkeitsgehalt von weniger als 18 Gew.-% und anschließend bei einer niedrigeren Temperatur auf eine Endfeuchtigkeit von weniger als 14 Gew.-% getrocknet wird.

Die erfindungsgemäße Vorrichtung ist dadurch gekennzeichnet, daß der Langwarentrockner als Einetagentrockner ausgebildet ist, der eine Schnellaufheizzone sowie eine Intensivtrocknungszone aufweist.

Nach dem erfindungsgemäßen Verfahren wird ein Langwarenerzeugnis einer Feuchtigkeit von weniger als 14 Gew.-%, insbesondere 11 bis 13 Gew.-% angestrebt. Der Endfeuchtigkeitsgehalt unterliegt in verschiedenen Ländern einer gesetzlichen Bestimmung. So wird in der Schweiz und in der Bundesrepublik Deutschland ein Wert von 12,5 Gew.-% gefordert. Unter rein technischen Gesichtspunkten (auch Qualitätsanforderung) sollte stets ein Wert von 14 Gew.-% unterschritten werden. Die Unterschreitung des Wertes von 11 Gew.-% Feuchtigkeit ist im allgemeinen zu vermeiden, da ein schärferes Austrocknen einem Gewichtsverlust gegenüber den gesetzlichen Werten gleich käme. Der Wert von etwa 12,5 Gew.-% kann als optimal gelten.

Ausgangsmaterial des erfindungsgemäßen Verfahrens sind die einen Pressenkopf verlassenden teilweise plastifizierten bzw. feucht-plastischen weichen Teigstränge. Wenn im Rahmen der Erfindung von « plastisch » gesprochen wird, so soll hierunter ein physikalischer Zustand verstanden werden, der u. a. eine Funktion von Temperatur und Feuchtigkeit ist. Unter Plastizität versteht man grundsätzlich die Eigenschaft fester Stoffe, bei Einwirkung äußerer Kräfte bleibende Verformungen zu zeigen. Die feucht-plastischen Teigstränge verlassen den Pressenkopf in der Regel mit einer Temperatur von 40 bis 50 °C. Höhere Temperaturen sind zu vermeiden, da sie unerwünschte, die Qualität des Fertigproduktes beeinträchtigende Veränderungen des zu trocknenden Guts hervorrufen.

Bei einer bevorzugten Ausgestaltung des erfindungsgemäßen Verfahrens werden die Teigstränge nach Austritt aus dem Pressenkopf durch Luftströmung oberflächlich unter Feuchtigkeitsverlust von 1 bis 2 Gew.-% behandelt. Hierdurch wird u. a. eine unerwünschte, sich zwischen den Teigsträngen ausgebildete Feuchtigkeit entfernt und auf diese Weise eine gewisse Klimastabilisierung erreicht. Die ventilierende Luft kann dabei vorzugsweise auf 40 bis 60 °C gebracht sein, um das sonst eintretende Abkühlen auf etwa grob 30 °C auszuschließen. Eine derartige Abkühlung müßte, was der Zielsetzung der Erfindung entgegensteht, in der anschließenden Schnellaufheizzone wieder kompensiert werden. Die Behandlung mit ventilierender Luft nach dem Pressenkopf dauert im allgemeinen 6 bis 10 min und führt zu einer Abtrocknung der Oberfläche. Durch diese Maßnahme kann die in Einzelfällen auftretende « Tropfenbildung » ausgeschlossen werden.

Die den Pressenkopf verlassenden Teigstränge, gegebenenfalls in der vorstehend beschriebenen Weise mit ventilierender Luft oberflächlich behandelt, werden mechanisch über eine Stabbehängevorrichtung gelegt, dann bei Erreichen der gewünschten Schenkellänge (unter Ausbildung einer U-Form) direkt geschnitten. Dabei werden die Teigstränge derartig geschnitten, daß eine Anpassung an die Dimensionierung der anschließenden Aggregate in der Aufheiz- und Trocknungsvorrichtung vorgenommen wird.

Zwingendes Erfordernis des erfindungsgemäßen Verfahrens ist es, daß die den Pressenkopf verlassenden, auf der Stabbehängevorrichtung zur gewünschten Länge geschnittenen Teigstränge einer Schnellaufheizung auf eine Temperatur von mehr als 80 °C unterzogen werden. Generell kommt für die Schnellaufheizung ein Bereich von 80 bis 140 °C, insbesondere von 80 bis 120 °C in Frage, wobei 95 bis 120 °C besonders bevorzugt sind. Die Zeitdauer, innerhalb derer die Schnellaufheizung erfolgt, ist selbstverständlich von der angestrebten Endtemperatur sowie von den Temperaturbedingungen bei der Aufheizung abhängig. Sie sollte jedoch mindestens 15 min betragen. Bevorzugt wird der Bereich von 15 bis 60 min, wobei der Bereich von 15 bis 30 min als besonders bevorzugt gelten kann. Als Aufheizmedium wird Luft einer relativen Feuchtigkeit von 60 bis 85 % gewählt, wobei der Bereich von 65 bis 75 % bevorzugt wird.

Bei der Einstellung der erwähnten Mindesttemperatur von 80 °C im Rahmen der Schnellaufheizung sind verschiedene Bedingungen zu beachten. Ist die Temperatur in der ersten Klimazone, in der die Schnellaufheizung erfolgt, bereits mit der angestrebten Endtemperatur identisch, dann könnte das dazu führen, daß die noch kälteren Teigstränge eine beträchtliche Auskondensation von Wasser zeigen und es zur Ausbildung eines übermäßigen Wasserfilms kommt. Das Wasser dieses Films könnte zwar bis zu einem gewissen Ausmaße von den Teigsträngen absorbiert werden, ein unerwünschtes Verbacken würde jedoch nicht ausgeschlossen werden können. Darüber hinaus könnte auch das sogenannte « Tropfen » bzw. « Abtropfen » einsetzen, das ebenfalls unerwünscht ist. Würde man allerdings in der ersten Klimazone die Aufheiztemperatur so steuern, daß sie sich der jeweiligen Produkttemperatur stark nähert, dann würde aufgrund des geringen Temperaturunterschiedes die für die Ziele der Erfindung erforderliche Schnellaufheizung kaum oder nicht möglich und bereits während der Aufheizperiode die Trocknung in einem erheblichen Umfang ablaufen, die jedoch weitgehend der nachfolgenden Behandlung in der zweiten Klimazone vorbehalten bleiben soll.

Um eine optimale Verfahrensführung in der ersten Klimazone im Sinne der Erfindung zu erreichen, sind daher vorzugsweise Temperatursprünge in dieser ersten Klimazone vorgesehen.

Die optimale Anzahl der Temperatursprünge hängt von der jeweils angestrebten Mindesttemperatur ab. Vier oder mehr Temperatursprünge sind bereits als vorteilhaft anzusehen. Wird beispielsweise eine Mindesttemperatur von 95 °C angestrebt, dann ist es in jedem Fall vorteilhaft, vier oder mehr Temperatursprünge zu wählen. In den einzelnen Zonen der unterschiedlichen Temperatursprünge laufen auf der Oberfläche der Langwaren in Form der feuchten, weich-plastischen Teigstränge, wenn diese in eine heißere Zone eintreten, die Prozesse der Auffeuchtung durch Kondensationserscheinungen und Abtrocknung ab. Hierbei ist darauf zu achten, daß die Auffeuchtung nicht zu einer übermäßigen Ausbildung eines wässrigen Films mit den erwähnten nachteiligen Erscheinungen, z. B. des Abtropfens, führt. Besonders vorteilhaft wird vorgegangen, wenn die Naßtemperatur (Taupunkt) eines nachfolgenden Klimabereiches höherer Temperatur unterhalb der Trockentemperatur des vorausgegangenen Klimabereichs liegt. Das bedeutet mit anderen Worten, daß die Temperatur der Luft, die in den nachfolgenden Klimabereich eingeleitet wird, nicht über die psychometrische Temperaturdifferenz ΔT hinaus angehoben werden darf. Wird diese Bedingung eingehalten, dann werden die sonst unerwünschten, in erheblichem Umfange an der Wandung des Behälters der ersten Klimazone eintretenden Kondensationen von Wasserdampf weitestgehend ausgeschlossen. Würde nämlich Wasserdampf an den Wänden kondensieren, dann könnte er auf die aufgeheizten Teigstränge fallen und verschiedene nachteilige Auswirkungen, wie z. B. das bereits erwähnte « Abtropfen » auslösen. Bei einer Optimierung des erfindungsgemäßen Verfahrens in der ersten Klimazone zur Schnellaufheizung würde die Summe der einzelnen ΔT-Werte (psychometrische Temperaturdifferenz der einzelnen unterschiedlich temperierten Klimabereiche) gleich oder geringfügig größer als die gesamte Temperaturanhebung von z. B. 40 bis 50 °C auf mindestens 80 °C sein.

Verfährt man in der oben geschilderten Weise in der ersten Klimazone unter Nutzung von mindestens einem oder vorzugsweise mehreren, insbesondere mehr als vier Temperatursprüngen, dann würde das zu der angestrebten Schnellaufheitzung und unter Minimierung des Trocknungseffektes führen, so daß die vollständig aufgeheizten Teigstränge am Ende der ersten Klimazone regelmäßig einen Feuchtigkeitsgehalt von 24 bis 27 Gew.-% aufweisen.

Die oben beschriebene vorteilhafte wirksame Schnellaufheizung unter Nutzung von Temperatursprüngen in der ersten Klimazone soll jedoch keineswegs die einzige Möglichkeit hierzu darstellen. Vielmehr kann die Schnellaufheizung, wie der Fachmann ohne weiteres erkennen kann, in vielfältiger Weise erfolgen. So wäre es grundsätzlich auch denkbar, daß das umgebende Aufheizmedium in Form von z. B. Luft des erwähnten Feuchtigkeitsgehaltes derart eingeregelt wird, daß ein graduelles (kontinuierliches) Temperaturprofil existiert, das jedoch genügenden Abstand von dem Temperaturprofil des aufzuheizenden Gutes aufweist, um die angestrebte Schnellaufheizung zu erreichen. Das bedeutet, daß an jedem Punkt der Aufheizstrecke eine ausreichende Temperaturdifferenz zwischen Produkt und umgebendem Aufheizmedium existiert. Um den nicht ganz auszuschließenden Trocknungseffekt in der ersten Klimazone weitestgehend zurückzudrängen, ist es im Rahmen der Erfindung von Vorteil, die relative Luftfeuchtigkeit in dem Aufheizklima auf 60 bis 85 % einzustellen. In diesem Falle könnte demzufolge mit heißem Wasserdampf aufgeheizt werden. Am Ende der Aufheizung liegt immer noch. ein weitgehend weiches, feuchtes und allenfalls teilplastifiziertes Material vor.

Bei der Behandlung der Langwaren in der ersten Klimazone, wie im übrigen auch in den nachgeschalteten weiteren Klimazonen, hat es sich als ganz besonders vorteilhaft gezeigt, wenn die Luftströmung in den verschiedenen Klimazonen abschnittsweise senkrecht zu den Langwaren gerichtet ist und ein Teil der Luft im Sinne eines Turbosystems durch innerhalb und außerhalb des Trocknungsraums geführte Kanäle zur Steuerung des Klimas der jeweiligen Klimazonen eingeleitet und abgeführt wird.

Die die erste Klimazone verlassende Langware einer Temperatur von mehr als 80 °C wird anschließend bei dieser erhöhten Temperatur und weiterhin im plastischen Zustand einer außergewöhnlich schnellen Trocknung unterzogen. Die Haupttrocknung erfolgt hierbei stets in der zweiten Klimazone, in der das Trocknungsmedium eine relative Feuchtigkeit von 65 bis 85 %, vorzugsweise 70 bis 80 % aufweist. Hierbei wird das ursprünglich feuchte bzw. weich-plastische Material einer weitergehenden Plastifizierung unterzogen, wobei im Endstadium ein thermo-plastisches Erzeugnis anfällt. Kühlt man dieses thermo-plastische Produkt auf Raumtemperatur ab, dann zeigt es Festigkeit. Im allgemeinen empfiehlt es sich, die in der ersten Klimazone eingestellte Produkttemperatur in der zweiten Klimazone beizubehalten. Hierzu sei auf die im Zusammenhang mit der Beschreibung der ersten Klimazone genannten Temperaturen bzw. Temperaturbereiche verwiesen. In Abhängigkeit von der Behandlungstemperatur in der zweiten Klimazone wird die Behandlungsdauer gewählt. Diese Behandlungsdauer sollte regelmäßig 30 min oder mehr betragen, wobei in der Regel der Bereich von 30 bis 120 min vorteilhaft ist. Ganz bevorzugt ist der Bereich von 30 bis 60 min. Hierbei handelt es sich insbesondere um bevorzugte Zeitangaben für die Trocknungstemperatur von 80 bis 100 °C, insbesondere 85 bis 95 °C. Es kann auf diese Weise bereits ein Verfahrenserzeugnis mit dem gewünschten Feuchtigkeitsgehalt von etwa 14 Gew.-%, insbesondere 11 bis 13 Gew.-% erhalten werden.

In Einzelfällen können in Abhängigkeit von dem eingesetzten Ausgangsmaterial unerwünschte Reaktionen bei erhöhter Temperatur ablaufen, insbesondere dann, wenn dem Teig temperaturinstabile Zustäze beigemischt werden, wie z. B. Eizusätze, Milchprotein etc., oder Rohfasern, bedingt die Einhaltung der Endqualität ein Abtrocknen bei tieferer Temperatur. Bevorzugt wird dabei die Langware in weniger als 1 h auf eine Produktfeuchtigkeit von etwa 18 % intensiv getrocknet und anschließend 1 bis 4 h, vorzugsweise 2 bis 3 h und bei einer Temperatur von etwa 75 °C auf die Endfeuchtigkeit von weniger als 14 % getrocknet. In solchen Fällen ist es zweckmäßig, den Feuchtigkeitsgehalt im Trocknungstemperaturbereich zunächst auf etwa 18 % zu senken. Dieses nun thermoplastische Erzeugnis wird in einer anschließenden dritten Klimazone bei einer derartig erniedrigten Temperatur behandelt, daß die unerwünschten Bräunungsreaktionen und andere Reaktionen weitgehend ausgeschlossen sind, aber dennoch eine verhältnismäßig schnelle Verfahrensführung unter Erhalt eines qualitativ hochwertigen Erzeugnisses gewährleistet ist. Bei dieser erniedrigten Temperatur wird der Feuchtigkeitsgehalt von weniger als 14 Gew.-%, vorzugsweise etwa 12,5 Gew.-% eingestellt. Es hat sich gezeigt, daß diese letzte Trocknungsmaßnahme mit Vorteil bei einer Temperatur unterhalb 75 °C durchgeführt wird. Hierbei gelten die vorstehend zum Trocknungsmedium der zweiten Klimazone, insbesondere im Hinblick auf die relative Luftfeuchtigkeit gemachten Ausführungen entsprechend. Da die unerwünschten Bräunungsreaktionen mit sinkendem Feuchtigkeitsgehalt und bei hohen Temperaturen stärker ablaufen, kann es von Vorteil sein, in der dritten Klimazone ein oder mehrere Temperatursprünge vorzusehen. Die zusätzliche Endtrocknung in der erwähnten dritten Trocknungszone dauert im allgemeinen bei 75 °C etwa 7 h und bei etwa 65 °C etwa 4 h. Anschließend wird die Langware möglichst unter Vermeidung weiteren Austrocknens zur Wahrung des angestrebten Feuchtigkeitsgehaltes abgekühlt.

Das Abkühlen der an sich fertig ausgetrockneten Langware kann zum Beispiel in einem Kühler mit anschließender Stabilisierung in Vorratssilos im Feuchtigkeitsgleichgewicht mit 55 bis 65 % relativer Luftfeuchtigkeit bei Raumtemperatur oder wenig darüber erfolgen, um ein stabilisiertes Produkt ohne Restspannungen zu erhalten. Entscheidend ist hier allein, daß durch Diffusionsvorgänge und durch die umgebende Atmosphäre keine wesentlichen Feuchtigkeitsmengen mehr aus dem Fertigprodukt austreten und der angestrebte Feuchtigkeitsgehalt gewahrt bleibt. Das abgekühlte Produkt kann anschließend in üblicher Weise auf die gewünschte Länge zerschnitten werden.

Das erfindungsgemäße Verfahren läßt sich mit besonderem Vorteil mit dem Einetagentrockner, der in eine Schnellaufheizzone und eine Intensivtrocknungszone aufgeteilt ist, durchführen.

Der Kerngedanke der Erfindung bietet eine große Anzahl von Vorteilen und läßt insbesondere eine Vielzahl von weiteren Kombinationen zu. Die Luft- und Klimaführung ist erstmalig mit dem Einetagentrockner wirklich gezielt durchführbar, insbesondere wenn die Luftzirkulation quer zur Bewegungsrichtung der Langware gewählt wird. Das Klima läßt sich mit fortschreitendem Trocknungsvorgang bezüglich aller Parameter, wie Luftgeschwindigkeit, Luftfeuchtigkeit und Lufttemperatur, beliebig fein steuern und regeln. Damit wird es auch erstmalig möglich, ein Konzept mit einer völligen Automatisierung, d. h. der automatischen Steuerung nach den vom Produkt geforderten Bedingungen zu erreichen. Ganz besonders vorteilhaft ist die Kombination der einetagigen Bauweise mit der sogenannten Turbo-Luftführung. Erstmalig läßt sich auch mit dem Einetagentrockner die automatische Produktüberwachung, zum Beispiel durch Messung der Produktfeuchtigkeit und/oder Farbe sowohl im Bereich der Schnellaufheizzone sowie der Intensivtrocknungszone erreichen. Dabei wird es bevorzugt, daß die Schnellaufheizzone sowie die Intensivtrocknungszone mit einem Umluftsystem derartig ausgerüstet ist, daß die Luft senkrecht von oben nach unten bzw. von unten nach oben durch die Ware geführt wird.

Ganz besonders vorteilhaft hat es sich erwiesen, daß mit dem angesprochenen Turbosystem mittels eines Luftverdichters bzw. Ventilators die Luft gesteuert wird, vorzugsweise von einem zentralen Computer, und derartig gesteuert in die einzelnen Klimazonen der Schnellaufheizzone sowie Intensivtrocknungszone eingeblasen wird. Dabei ist die Schnellaufheizzone sowie die Intensivtrocknungszone vorzugsweise mit Längskanälen für Frischluft und Abluft ausgerüstet. Das gestattet in dieser Anordnung, das jeweilige Klima in jeder Stufe der Schnellaufheizzone sowie Intensivtrocknungszone so einzuregeln, daß die entsprechenden klimatischen Bedingungen optimal reguliert werden können. Im Sinne der Erfindung kann sich daher vor allem in der Trocknungszone bzw. den einzelnen Abschnitten kein Unterdruck oder Überdruck einstellen.

Die erfindungsgemäße Vorrichtung mit Einrichtungen zur Steuerung der klimatischen Bedingungen in den einzelnen Umluftzonen sowie Ruhezonen wird durch eine gezielte Feinverteilung der Zuluft und der gesteuerten Entnahme der Abluft aus den einzelnen Klimatranchen durch die entsprechenden Längskanäle erreicht. Zur Einregulierung des Zuluft- bzw. Abluftstroms weist die Vorrichtung zu den Längskanälen Verbindungskanäle mit steuerbaren Drosseln zur abschnittsweisen Klimasteuerung im Sinne des bereits angesprochenen Turbosystems auf.

Es ist von Vorteil, wenn der eine Schnellaufheizzone sowie eine Intensivtrocknungszone aufweisenden Vorrichtung Umluft für Frisch- und Abluft zugeführt wird und sie Drossel- und Steuerklappen sowie zur Verhütung von Kondensatbildung eine Aufheizvorrichtung für Frisch- und/oder Abluft aufweist. Zudem ist es günstig, wenn das System Frischluft-Abluft zur Klimaaufbereitung, Klimasteuerung und zum Klimaausfahren kurzgeschlossen werden kann. Des weiteren ist es im Sinne der Erfindung zweckmäßig, daß zur Steuerung und Regulierung der einzelnen Klimabedingungen bzw. Klimatas der Schnellaufheiz- sowie der Intensivtrocknungszone die Vorrichtung vorzugsweise mit einer von zentralen Computer gesteuerten Dampfbefeuchtung ausgestattet ist.

Für die Optimierung des Systems sind in den Längskanälen der Schnellaufheizzone sowie der Intensivtrocknungszone in jedem ventilierten Element einstellbare Schieber angeordnet.

Wie bereits geschildert, wird zur Sicherstellung einer optimalen Steuerung der Trocknungszonen für die Ab- und Frischluft mit besonderem Vorteil ein der Umluft überlagertes Turbosystem angewandt. Für die Anordnung dieses Systems in der erfindungsgemäßen Vorrichtung ist es aus Energiegründen und im Hinblick auf die bereits angesprochenen Kondensationsprobleme zweckmäßig, daß die Längskanäle des Turbosystems für Ab- und Frischluft in der Trocknungskammer der Einetagentrockners angeordnet sind. In einer optimalen Anordnung der erfindungsgemäßen Vorrichtung werden Luftmischaggregate, Aufheizelemente, Verdichtungs- und Saugeinheiten des Turbosystems in den Abluft- und Frischluftkanälen innerhalb der Trocknungskammer des Einetagentrockners eingebaut. Energieverluste werden somit auf ein Minimum reduziert.

Im Hinblick auf mechanische und bedienungstechnische Aspekte kann es zweckmäßig sein, daß die Luftmischaggregate, Aufheizelemente, Verdichtungs- und Saugeinheiten des Turbosystems in Kanälen außerhalb der Trocknungskammer angeordnet sind. Dabei ist es selbstverständlich, daß diese Elemente entsprechend isoliert sind, um Wärmeverluste zu verhindern bzw. auszuschließen.

Von besonderer Bedeutung ist für die Erfindung auch die bereits erörterte Schnellaufheizzone. Diese Schnellaufheizzone weist vorzugsweise eine oder mehrere Zonen unterschiedlicher Temperatur auf. Man spricht hier von Temperatursprungabschnitten mit Temperatursprüngen von 4 bis 12 °C. Diese Temperatursprungabschnitte werden so eingestellt, daß es zwischen den angrenzenden Klimatas unterschiedlicher Temperatur nicht zu sogenannten Taupunktzonen und somit nicht zur Kondensatbildung in den verschiedenen Umluftzonen bzw. -konditionen kommt und damit die unerwünschten Auffeuchtungen der zu trocknenden Ware ausgeschlossen sind.

Mit dem erfindungsgemäßen Gedanken ist es nunmehr möglich, die technologischen Möglichkeiten des Verfahrens zur Herstellung von Teigwaren voll auszuschöpfen und so zu verbessern, daß unter Beibehaltung der an das Verfahrensprodukt gestellten qualitativen Anforderungen eine weitgehend störungsfreie, einfache und wirtschaftliche Verfahrensführung erreichbar ist. Damit dies überhaupt bei den gewählten hohen Temperaturen und kurzen Produktionszeiten möglich ist, werden vorzugsweise Produktmeß- und Überwachungsgeräte eingesetzt, die zum Beispiel über einen zentralen Computer ausgewertet und für die automatische Regelung der Trocknungsparameter eingesetzt werden. Es werden dadurch dem Teigmeister routinemäßige Kontrollgänge abgenommen.

Damit die zu trocknende Ware der Kontrolle und Überwachung unterzogen werden kann, ist in der Schnellaufheiz- bzw. Intensivtrocknungszone eine die Ware aus dem Einetagentrockner herausführende, automatische Stabentnahmevorrichtung zweckmäßigerweise derart angeordnet, daß im Bereich der Schnellaufheizzone und in der Intensivtrocknungszone mindestens eine automatische Stabentnahmevorrichtung angeordnet ist. Diese automatische Entnahme eines Stabes aus dem Einetagentrockner erlaubt eine exakte und kontrollierte Überwachung des Produktes. Damit es jedoch nicht zu unerwünschten Produktverlusten (Produkt am Stab kann 3 bis 6 kg betragen) und zu einem Produktloch im weiteren Verfahrensablauf kommt und die Ware derselben Stäbe mehrmals überprüft werden kann, weist die Stabentnahmevorrichtung vorzugsweise eine automatische Stabrückführung in die entsprechende Zone auf.

Ganz besonders vorteilhaft ist es im Hinblick auf eine weiterführende Automatisierung der Gesamtvorrichtung, wenn die automatische Stabentnahmevorrichtung Produktmeß- bzw. Uberwachgeräte für die Produktqualität zur Steuerung bzw. Regelung der Trocknungsparameter (Klima) aufweist.

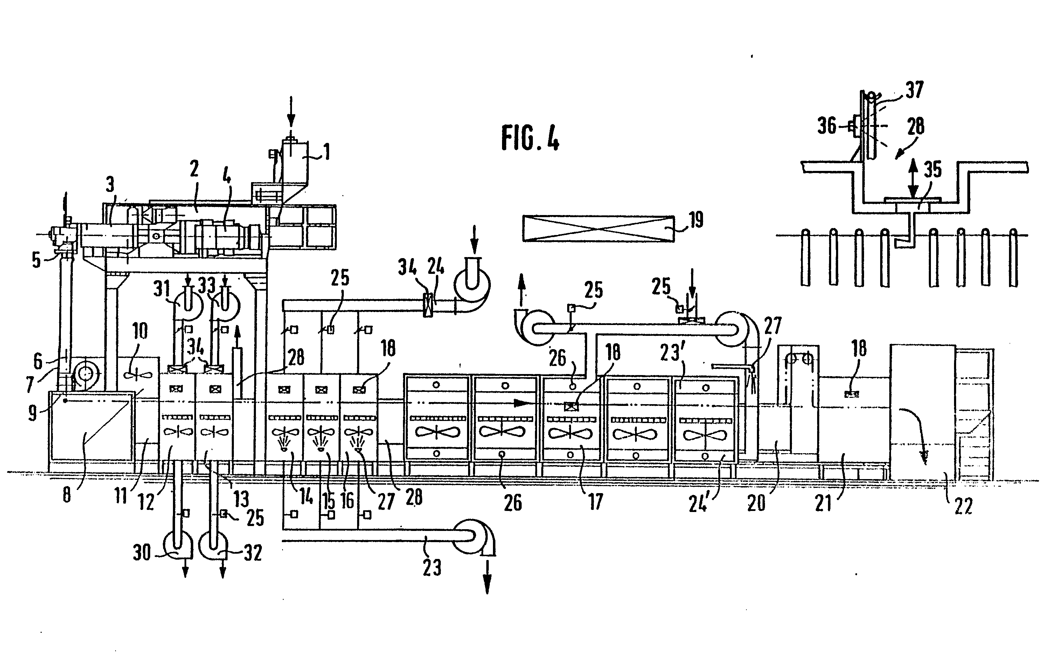

Die entsprechenden Anordnungen der Stabentnahmevorrichtungen zeigt die nachfolgend noch detailliert erläuterte Fig. 4, Position 28 und oben rechts mit den Positionen 35/36/37 die schematische Darstellung der Entnahme. Ein Fingerhaken 35 entnimmt dem Einetagentrockner einen behängten Stab. Die Langware 37 wird in ruhendem Zustand mit Meßgerät 36 auf die gewünschten Produktparameter (Temperatur, Feuchte, Farbe, Stärke, Eiweiß und Asche usw.) geprüft. Wird der Stab zurückgeführt, dann bleibt er am Fingerhaken 35. Die Kontrollen werden durchgeführt sowie eine Musterentnahme für die Labors, die ebenfalls automatisch erfolgen kann. Der Stab wird nach der Kontrolle wieder seiner Position im Prozeß zugeführt, gegebenenfalls nochmals in einem weiteren Trocknungsabschnitt kontrolliert.

Die mit der Erfindung verbundenen Vorteile sind insbesondere darin zu sehen, daß es erstmals möglich ist, qualitativ hochwertige Langwaren, ähnlich wie im Brotbackofen, zumindest im Hauptteil der Trocknung, in einem einetagigen, langgestreckten Trocknungstunnel zu gewinnen, ohne daß die vorstehend geschilderten Ruhezonen vorgesehen sind. Die Verfahrensführung ist etwa vier bis achtmal kürzer als bei den Verfahren des Standes der Technik. Da hier alle Stäbe der Stabbehängevorrichtung in der gleichen Vorwärtsrichtung bewegt werden, treten auch weniger Pannen auf. Das geht auch darauf zurück, daß ein großer Teil der Stabübergaben und Umlenkungen grundsätzlich wegfällt. Hierdurch ist eine kontinuierliche Verfahrensführung möglich, da das Klima in den einzelnen Klimazonen örtlich besser beherrscht und gesteuert werden kann. Hierbei wird ein Energiegewinn erzielt, wenn die beheizte, klimatisierte Stabbehängevorrichtung als erster Abschnitt unmittelbar vor der ersten Klimazone bzw. der Schnellaufheizzone angeordnet ist. Das Klima in den geschilderten einzelnen Klimazonen läßt sich optimal durch Vermischen, Aufheizen oder Befeuchten in dem erforderlichen Maße anpassen, wobei Luft als Träger von Wärme und Feuchtigkeit maximal nutzbar ist. Insgesamt läßt sich also der gesamte Trocknungsprozeß sehr wirtschaftlich führen, wobei eine Vielzahl einfach zu handhabender Maßnahmen eine optimale Anpassung und Ausnutzung der jeweiligen Gegebenheiten ermöglicht. Es fällt ein Verfahrenserzeugnis an, das den höchsten Qualitätsanforderungen genügt. Es zeigt schöne Farbe, vorzügliche Biß- und Kochfestigkeit sowie weniger Schleimbildung beim Kochen. Das erfindungsgemäße Verfahren soll nachfolgend im Hinblick auf diese vorteilhaften Eigenschaften des Verfahrenserzeugnisses technologisch erläutert werden. Hierbei sollen auch verschiedene Neuerkenntnisse angesprochen werden.

Die vorliegende Erfindung brachte eine Reihe neuer wertvoller Erkenntnisse. Insbesondere aber auch Klärung für die Herstellung der Langwaren generell. Für die gesamten physikalischen Prüfungen (Mundgefühl, Beißfestigkeit, Geschmack, Farbe usw.) bleibt für alle traditionellen Nahrungsmittel zentral die Erhaltung der gewohnten Qualität. Für den Menschen ist rohe Getreidestärke schwer verdaulich. Brot wird deshalb gebacken, Teigwaren werden gekocht. Beim Backen und Kochen wird das Eiweiß denaturiert. Es kann deshalb der wirtschaftlichen Betriebsführung überlassen bleiben, in welcher industriellen Verfahrensstufe eine ganze oder teilweise Denaturierung stattfindet. Es hat sich für eine optimale Endqualität, wie auch für eine problemlose Trocknung der Teigwaren als sehr wichtig erwiesen, daß bereits in der Teigvorbereitung und Pressung das best mögliche Proteingerüst hergestellt wird. Dies wird dadurch erreicht, daß bei den Preßdrücken in der Presse eine Temperatur von 50 °C nicht überschritten wird. Wenn die Langware die Presse mit z. B. 45 °C verläßt, ist das Kleberprotein noch « lebend », so daß das einem solchen Protein innewohnende Reaktionsvermögen voll genutzt werden kann, um ein sehr feinmaschiges, räumliches Netz bzw. Proteingerüst aufzubauen. Vorausgesetzt, daß auf die Teigteile gar keine mechanisch-thermischen Verformungskräfte wirken — die Teigstränge werden sofort nach dem Preßvorgang auf die Stäbe gehängt und bleiben auf den Stäben bis sie genügend getrocknet sind — bleibt das Proteingerüst nicht nur erhalten, sondern wird, wie Versuche gezeigt haben, noch intensiver ausgebildet, wenn die Trocknung zum Beispiel im wesentlichen zwischen 80 und 100 °C während weniger als etwa 2 Std abgeschlossen ist. Die letzte Phase der Stabilisierung, bei der allenfalls noch 1 bis 2 % Feuchtigkeit entzogen werden, ergibt keine Nachteile, da dabei Temperaturen unter 65 °C, teilweise Umgebungsluft, angewandt werden.

Die Klebereiweißstoffe beginnen bei Temperaturen über etwa 50 bis 60 °C zu koagulieren. Die preßwarmen Langwaren (etwa 45 °C) werden vorzugsweise direkt nach dem Preßvorgang während 15 bis 30 min und 65 bis 75 % relativer Feuchtigkeit auf über 80 °C erwärmt, und dann bei zum Beispiel 85 bis 95 °C auf einen Feuchtigkeitsgehalt von etwa 14 % getrocknet. Auf diese Weise wird das Proteingerüst verfestigt. Die Kocheigenschaften werden verbessert. Diese Teigwaren verkochen nicht leicht. Die Stärke wird beim Kochprozeß nur sehr minimal herausgelöst. Die Bißfestigkeit bleibt gut.

Das in der Presse gut vorbereitete Klebergerüst gibt durch die mit der Trocknung fortschreitenden Koagulation der Langware eine genügende Festigkeit, damit die Teigfäden auf den Stäben nicht durch ihr Eigengewicht abreißen.

Obwohl gemäß der Erfindung die bisher dafür notwendige Verkrustung der Teiloberfläche völlig vermieden wird und die Stärke bei höheren Temperaturen geringere Zusammenhangskräfte aufweist, führt das überraschenderweise zu keinem Nachteil. Untersuchungen haben gezeigt, daß bei schneller, jedoch nicht übertriebener Trocknung in der Aufheizzone eine dauernde Änderung bzw. Umstrukturierung der inneren Bindekräfte stattfindet. Unmittelbar nach der Presse besteht ein gleichmäßiges Gefüge von Protein- bzw. Klebergerüst und Stärkekörnern sowie feinverteiltem Wasser. Das Klebergerüst kann in diesem Zustand mit einem Gummikörper, also einem elastischen Körper, verglichen werden. Es nimmt jedoch mit länger dauernder Hitzeeinwirkung, entsprechend dem Kochen von Eiern, durch den Koagulationsvorgang an Festigkeit zu. Die Problematik der Koagulation von Eiweiß zeigt sich auch bei der Herstellung von Eisuppe. Die Stärke entspricht einem kristallinen Körper. Das noch lebende Protein und der hohe Wasseranteil geben der frisch gepreßten Langware ein feucht-plastisches Verhalten. Mit zunehmender Temperatur wird der kristalline Aufbau der Stärke gelockert. Dabei werden auch die Wasserstoffbindungen gelöst. Durch den fortschreitenden Trocknungsvorgang verbleibt insgesamt jedoch eine genügende Festigkeit.

Durch das Vermeiden einer Trockenkruste an der Teigoberfläche bleiben die Poren bis zur Teigoberfläche frei, so daß in dem höheren Temperaturbereich (z. B. 80-100 °C) die Lockerung der Wasserstoffbindungen, verbunden mit dem Aufweichen der Stärkestruktur, für ein rasches Austrocknen ausgenutzt werden kann, ohne daß während der Haupttrocknung sehr große Dampfdruckdifferenzwerte zwischen dem Produkt und der Trocknungsluft benötigt werden. Die besten Werte konnten bei einer relativen Luftfeuchtigkeit von 70 bis 80 % erzielt werden.

Mikroskopische Schnitte mit entsprechenden Färbungen haben ferner gezeigt, daß entsprechend der Erfindung hergestellte Langwaren keine Verkleisterung und auch keine störende Stärkeveränderung, insbesondere aber ein wesentlich verfestigtes Proteingerüst und eine, den bisherigen besten Langwaren gleich gute Qualität aufweisen. Das muß überraschen, da die biologischen, chemischen und physikalischen Vorgänge zwischen dem rohen Teig und der getrockneten Teigware anerkannterweise außergewöhnlich komplex sind. Ein Stärkekorn hat in der Regel einen Durchmesser von 5 bis 50 μm, die Dicke von z. B. Spaghetti liegt zwischen 1,6 und 2,5 mm. Bei guter Qualität wird verlangt, daß die Beschaffenheit der Teigware auch im mikroskopischen Schnitt von der Mitte bis zur äußersten Randzone gleichmäßig ist, auch ohne Riß- oder Blasenbildung, die bei längerer Lagerung zu Lagerschäden führen würde. Gerade die Teigware stellt heute ein klassisches Lagerprodukt (Notvorrat) dar. Einen besonderen Vorteil ergibt die Erfindung im Hinblick auf hygienische bzw. mikrobiologische Fragen. Die Behandlung entspricht einer ausgezeichneten Pasteurisierung.

Die Erfindung hat insbesondere eine deutliche Klärung des bio-chemischen Vorganges bei der Teigwarenherstellung erbracht. In den Anfängen der Teigwarenherstellung mußte mit Trocknungszeiten von gegebenenfalls mehreren Tagen und bei Umgebungstemperaturen von weniger als 50 °C auch eine schwer zu kontrollierende Säuregärung in Kauf genommen werden, die, falls Milchsäure nur in Spuren gebildet wird, den Gourmet ansprechen mag, jedoch vielfach ausgeartete und zu « sauren » Teigwaren führte. Völlig unerwünscht sind jedenfalls die weiteren zusätzlichen enzymatischen Oxidationsreaktionen in Richtung enzymatischer Bräunung und Farbzersetzung. Auch dieses Klima ist eine ideale Brutstätte für Bakterien, einschließlich Krankheitserreger, wie Salmonellen und Staphylokokken. Wenn nun andererseits der Trocknungsprozeß über eine zu große Zeitdauer bei Temperaturen über 70 °C aufrechterhalten wurde, lief dadurch die Maillard'sche Reaktion ab, ähnlich wie beim Braten bzw. Rösten und Brotbacken, die zu einer Braunfärbung führte. Bei einer Führung des gesamten Herstellungsprozesses bei Temperaturen von 81 bis 100 °C im feuchten Zustande der Ware kommen dagegen die Gelbpigmente zum Tragen und geben der Langware ein appetitliches Aussehen. Zudem wirkt diese Behandlung in diesem Temperaturbereich pasteurisierend auf die Ware. Dies setzt aber völlig kontrollierte Bedingungen während des ganzen Herstellungsverfahrens, wie es erfindungsgemäß geschieht, voraus. Wesentlich ist dabei die automatische Steuerung jeder Klimazone, damit die erfindungsgemäßen Bedingungen strikt eingehalten werden. Ganz besonders vorteilhaft ist es dabei, daß die Langware im wesentlichen auf einen Feuchtigkeitsgehalt von weniger als 18 %, vorzugsweise auf weniger als 14 % in einer Etage durch eine Bewegung in Längsrichtung durch die verschiedenen Klimazonen geführt wird. Die Luftströmung wird in den verschiedenen Klimazonen abschnittsweise senkrecht zu der Langware derart gerichtet, daß ein Teil der Luft im Sinne eines Turbosystems durch innerhalb und/oder außerhalb des Trocknungsraumes geführte Kanäle zur Steuerung des Klimas der einzelnen Klimazonen eingeleitet und abgeführt wird.

Dadurch, daß erfindungsgemäß die weiche, feucht-plastische Teigware ohne wesentliche Trocknung sehr schnell auf eine Temperatur von mehr als 80 °C gebracht wird, um dort ebenfalls innerhalb einer kurzen Zeitspanne getrocknet zu werden, entstehen keinerlei Risse, Spannungen oder Verkrümmungen an der Langware. Somit bleiben die einzelnen Teigstränge der Langware absolut gerade. Eine krumme Ware wäre im übrigen bruchempfindlicher. Darüber hinaus würde bei Unregelmäßigkeiten auch eine größere Gefahr des Verklebens der einzelnen Teigstränge bestehen.

Die Erfindung wird nachfolgend unter Bezugnahme auf Figuren noch näher erläutert. Es zeigen :

Figur 1 schematisch eine erfindungsgemäße Vorrichtung in Längssicht mit einer mit Schleusen ausgerüsteten Schnellaufheizzone,

Figur 2 wie Figur 1, jedoch mit einer schleusenlosen Schnellaufheizzone,

Figur 3 den Verlauf von Trocknungskurven bei bekannten und dem erfindungsgemäßen Verfahren in Form eines Diagramms,

Figur 4 wie Figur 2, jedoch mit Modifizierungen (Stabentnahmevorrichtung sowie Zu- und Abluftsystem) und

Figur 5 in schematischer Darstellung eine Überwach-, Steuer- und Regeleinrichtung für die erfindungsgemäße Vorrichtung.

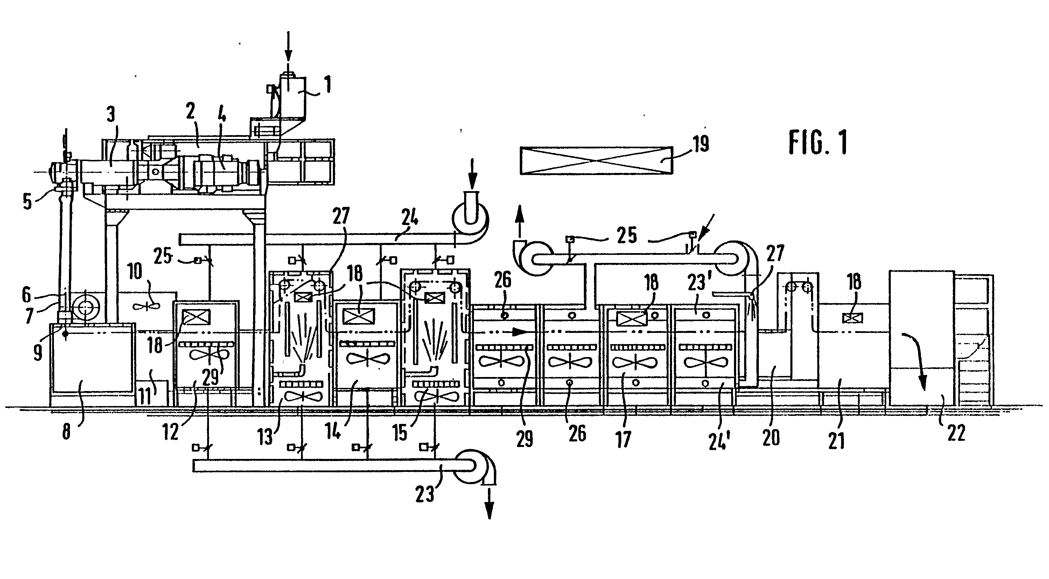

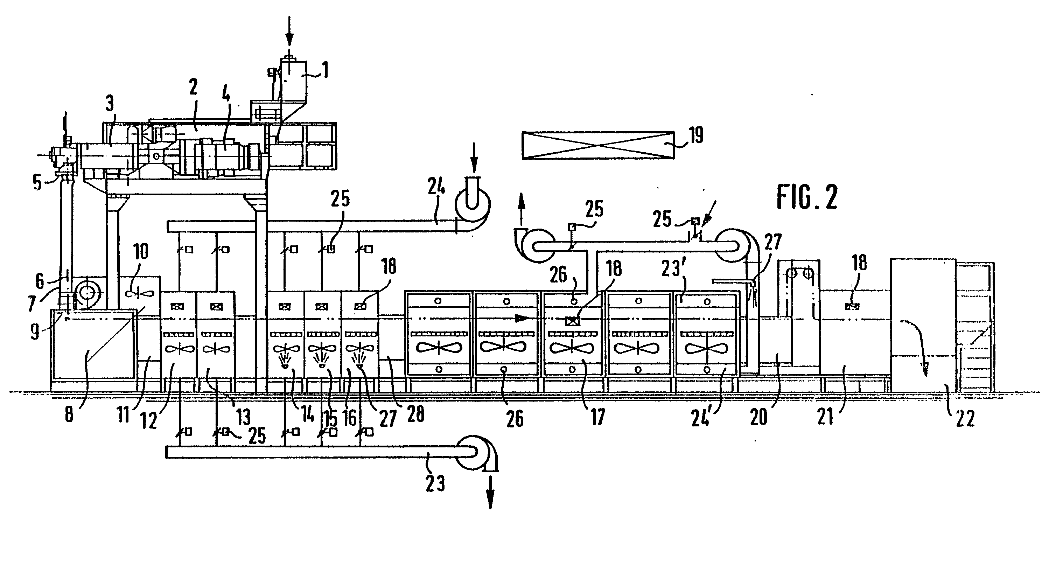

Nach Figur 1 und Figur 2 wird das Rohmaterial in Form von Grieß, Wasser und Eiern über eine Dosiervorrichtung 1 in einen Mischtrog 2 eingetragen. Vom Mischtrog 2 wird die Teigware in eine Langwarenpresse 3 mit Pressenantrieb 4 eingespeist. Beim Austritt aus der Langwarenpresse 2 werden die Langwaren, z. B. Spaghetti, in die gewünschte Form gebracht und durch einen Schneideapparat 6 auf die erforderliche Länge, z. B. 30 bis 50 cm geschnitten. Die noch nicht fertigen Langwaren bzw. Teigwarenstränge verlassen die Form 5 bei einer Temperatur von 40 bis 50 °C. Damit an dieser Stelle weder ein Verkleben, noch ein Abkühlen der Langware eintritt, wird diese durch einen Einlaufkanal 7 direkt in eine konditionierte Behängevorrichtung 8 eingeführt. Zwischen dem Einlaufkanal 7 und der Behängevorrichtung 8 befindet sich ein Ventilator 9, durch welchen geheizte Luft an die Ware geblasen wird. Von der Behängevorrichtung 8 gelangt die Langware in ein Eintragselement 11, in dem ebenfalls beheizte Luft mittels Ventilator 10 an die Ware geblasen wird. Von hier wird die Langware in eine Schnellaufheizzone 12, 13, 14, 15, 16 geführt und anschließend dem Haupttrockner 17 zugeführt, der eine Anzahl ventilierter Elemente aufweist.

Je nach gewünschter Trocknungstemperatur im Haupttrockner 17 kann das Produkt in weniger oder mehr Temperatursprüngen von anfänglich z. B. 40 °C auf 90 °C bis 120 °C gebracht werden.

Die erfindungsgemäße Vorrichtung, deren Wesen ein neuer Langwarentrockner darstellt, weist als hauptsächliches Merkmal einen langen durchgehenden, einetagigen Trocknungstunnel auf. Entsprechend der Bewegung des Brotlaibes in einem industriellen Durchlaufbackofen bewegen sich die Langwaren an Stäben aufgehängt in Längsrichtung. Die Luft wird dagegen von oben nach unten oder von unten nach oben durch den Trocknungstunnel geblasen. Jede Klimazone ist mit einer Temperatur- und Feuchtesonde 18 ausgerüstet und wird mit einer zentralen, mikrocomputergesteuerten Klimaregulierung 19 reguliert, um die gewünschten Bedingungen in der Trocknungsstufe aufrechtzuerhalten. Hierzu ist es nötig, in jedem Trocknerabschnitt die gewünschte Temperatur mittels Wärmetauscher 29 und die gewünschte Luftfeuchtigkeit mittels Dampf oder Frischluft einzuregulieren.

Sind große Klimasprünge notwendig, dann könnten in der Aufheizzone Elemente mit Schleusen (Figur 1) 13, 15 vorgesehen werden.

Am Ende der Haupttrocknung befindet sich eine Schleuse 20, anschließend ein Kühler bzw. Formstabilisator 21. Den Abschluß der gesamten Trocknungslinie bildet eine Schneidemaschine 22. Anschließend wird das Produkt den Verpackungsmaschinen zugeführt.

Zur Sicherstellung einer optimalen Steuerung der Trocknungszone wird, wie in Figur 1 und 2 dargestellt, für die Frisch- und Abluft mit besonderem Vorteil ein sogenanntes Turbosystem angewendet. Hierzu sind bei der Schnellaufheizzone Kanäle 23 und 24 vorgesehen. Durch automatisches Steuern der Luftklappen 25 kann die Frisch- und Abluftmenge so gesteuert werden, daß kein Über- oder Unterdruck entsteht, was zu einer ungewollten Klimabeeinflussung der benachbarten Zonen führen könnte. In der mehrelementigen Haupttrocknungszone 17 wird das Turbosystem mit einem Luftsystem ergänzt, um die konditionierte Frischluft auf der ganzen Länge des Trockners regelmäßig zu verteilen. Die Kanäle 23' und 24' sind im Inneren des Trockners angeordnet und außen miteinander verbunden. Ein Teil der klimatisierten Trocknerluft zirkuliert in diesen Kanälen und wird mittels Frischluft und Wasserdampf aufbereitet. Diese aufbereitete Luft kann mittels Schieber 26 gleichmäßig auf die ganze Länge des Trockners, auch wenn dieser sehr lang ist, verteilt werden. Es ist auch möglich, diese Umluft durch Kondensation zu trocknen, statt Frischluft zuzuführen. Damit könnte eine Wärmerückgewinnung und entsprechende Senkung des Energieverbrauchs erreicht werden. Aus hygienischen Gründen ist es dabei wichtig, daß sich die Stelle, wo das Kondenswasser anfällt, außerhalb des Trockners befindet.

Für die Optimierung des Prozesses sollen die Klimabedingungen der diversen Zonen bei Beginn der Produktion eingestellt werden. Zu diesem Zweck sind Düsen 27 für das Einspritzen von Wasserdampf vorgesehen.

Um eine Kontrolle beim Trocknungsverlauf zu ermöglichen, ist eine automatische Produktentnahme 28 zwischen der Schnellaufheizzone und der Haupttrocknungszone vorgesehen.

Sollte aus Qualitätsgründen das Produkt mit Temperaturen unter 80 °C fertiggetrocknet werden, kann nach der Haupttrocknungszone eine weitere separat regulierte Endtrocknungszone vorgesehen werden. Diese Trocknungszone könnte aus einem Einetagentrockner oder auch einem 3-Etagentrockner bestehen. In jedem Fall ist am Ende der Trocknung ein Fühler vorzusehen.

Die Figur 4 zeigt eine in der Figur 2 gezeichte Vorrichtung mit modifizierenden ergänzenden Einrichtungen. Eine besondere Gestaltung der Entnahmevorrichtung zeigt die Position 28, oben rechts mit den Positonen 35/36/37 in schematischer Darstellung der Entnahme. Eine detaillierte Eröterung der Position 28 erfolgte bereits. Durch die Einrichtungen 31 und 33 wird dem System Frischluft zur Klimaaufbereitung unter Aufheizung durch das Element 34 zugeführt. Die Abluft wird mittels der Einrichtungen 30 und 32 abgezogen. Durch dieses regelmare System ist es möglich, die Ausbildung von Unterdruck oder Überdruck im System auszuschließen.

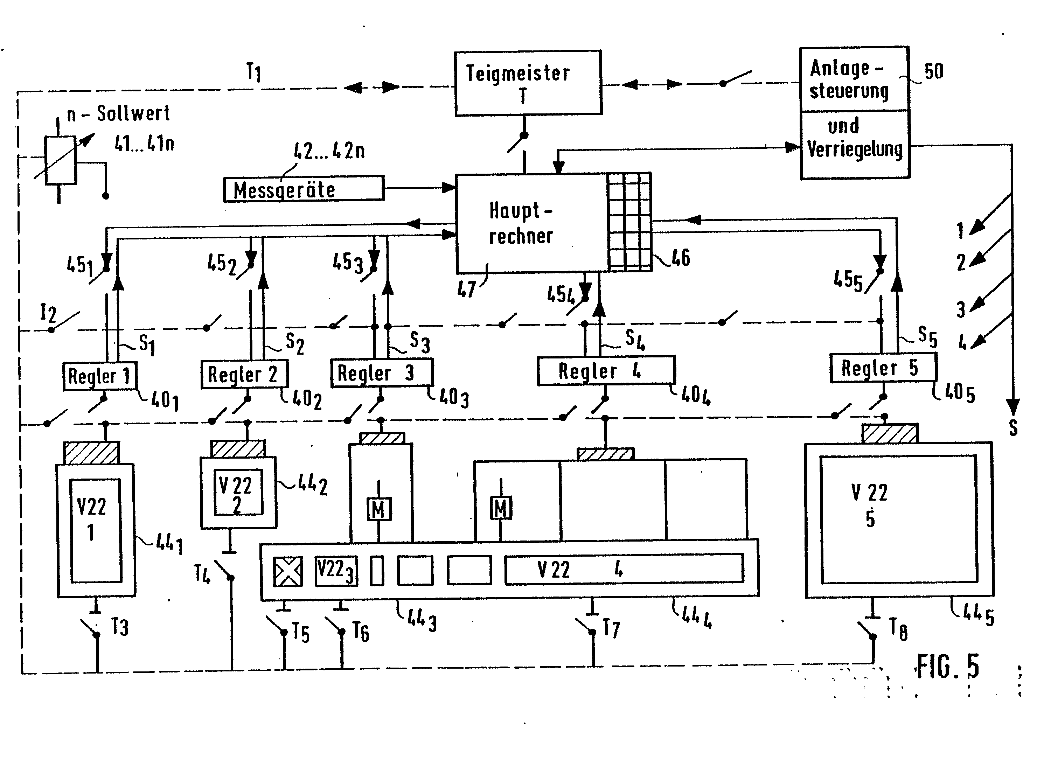

In der Figur 5 sind die einzelnen Verfahrensabschnitte durch entsprechende Blöcke hervorgehoben, wobei die Verfahrenszone 1 die Rohmaterialvorbereitung (gesteuerte Rohmaterialmischung) aus Grieß, Wasser und anderen Zusätzen sowie deren Dosierung wiedergibt. Die Teigbereitung der Verfahrenszone 2 erfaßt hauptsächlich das Mischen, Pressen und Formen. Die frischgepreßte Ware wird automatisch auf Stäbe aufgehängt und in die Verfahrenszone 3 eingeführt, die die Schnellaufheizzone darstellt. Die Verfahrenszone 4 umfaßt die eigentliche Intensivtrocknung. In der Verfahrenszone 5 wird die im wesentlichen fertiggetrocknete Langware stabilisiert, siliert und automatisch in Haushaltsverpackungen oder andere Verpackungen abgefüllt.

Für jede Verfahrenszone ist systematisch ein Regler $40_1$-$40_n$ dargestellt. Tatsächlich weist jede einzelne Zone gegebenenfalls eine Anzahl einzelner Regler auf, die in einem Hilfsrechner zusammengefaßt, gegebenenfalls auch mit der Anlagesteuerung und Verriegelung 50 gekoppelt sind, dort zumindest für den Informationsfluß angeschlossen werden können.

Der Hauptrechner 47 ist direkt mit einem Sollwertspeicher 46 in ständiger Verbindung zur Hinterlegung einzelner Daten bzw. Programme und zur Entnahme derselben. Mit dem Hauptrechner 47 sind ebenfalls Meßgeräte $42_1$-$42_n$ (bzw. wie in Figur 4, Position 36, Produktmeß- und Überwachungsgeräte (M) für Produkttemperatur, Feuchte, Farbe und Produktstärke sowie Eiweiß und Asche und dergleichen) in Verbindung. Gegebenenfalls kann ebenfalls in Verbindung mit den Meßgeräten (M) ein Sollwertgeber $41_1$-$41_n$ für einen ganzen oder teilweise Handbetrieb benutzt werden.

Sehr wesentlich ist es des weiteren, daß die Signalleitungen $S_1$-$S_n$, die von den jeweiligen Verfahrenszonen mit dem Hauptrechner 47 verbunden sind, zu keinem Zeitpunkt unterbrochen werden. Demgegenüber weisen die Steuerleitungen von dem Hauptrechner zu den jeweiligen

Reglern $40_1$-$40_n$ bzw. Verfahrenszonen $44_1$-$44_n$ zur Umschaltung Umschalter $45_1$-$45_n$ bzw. $48_1$-$48_n$ auf. Ein zentraler Punkt der Anlage ist das Zusammenspiel der einzelnen Anlageelemente mit den elektronischen bzw. Computermitteln einerseits sowie dem Teigmeister, der mit seiner Erfahrung und Kenntnis über die Produkt-sowie Anlagespezialitäten den täglich vorkommenden Abweichungen entgegenwirken kann.

Für die Betriebsführung kann wie folgt vorgegangen werden : bei einer erstmalige Inbetriebnahme werden alle Anlageelemente entsprechend dem Verriegelungssystem in Betrieb genommen. In der Folge werden von Hand die einzelnen Regelkreise (für Regelung der Luftmenge, Feuchtigkeit und Temperatur usw.) optimiert. Die entsprechenden Daten werden dem Hauptrechner 47 bzw. dem Sollwertspeicher 46 zur Festlegung der Sollwertschemata (z. B. Lochkarten) eingegeben.

Die Produktion wird durch Ansteuerung der entsprechenden Produktzufuhr-bzw. Dosierelemente gestartet. Entsprechend den Erfahrungswerten werden die mit den Produktparametern zusammenhängenden Steuer- und Regelkreise grob eingestellt. Die entsprechenden Werte können wiederum dem Sollwertspeicher 46 bzw. dem Hauptrechner 47 übergeben werden. Anhand dieser Daten wird die ganze Anfahrproduktion mit dem entsprechenden, dafür abzustimmenden Anfahrprogramm gesteuert. Nach Abschluß der Anfahrphase, die zum Beispiel 1 bis 4 h dauern kann, beginnt der Teigmeister die Kontrolle des gesamten Fabrikationsvorganges. Er optimiert dann die Produkt-, Luft- bzw. Klimaparameter in den ihm interessant erscheinenden bzw. in den erforderlichen Verfahrensabschnitten. Hierfür unterbricht er die entsprechende Steuerleitung des Hauptrechners 47, beispielsweise zur Verfahrenszone 3, indem er den Schaltkontakt $45_3$ unterbricht. Der Regler 3 fährt mit dem vor dem Unterbrechen der Steuerleitung gegebenen Sollwert weiter. Der Teigmeister gibt nun einen verbesserten Sollwert durch entsprechende Eingabe an den Regler 3 bzw. an einen der Regler in der Verfahrenszone 3. Die besten gefundenen Sollwerte werden wiederum dem Hauptrechner bzw. dem Sollwertspeicher zwecks Korrektur eingegeben. Anschließend kann der Umschalter $45_3$ wieder geschlossen und die entsprechende Gruppe von Reglern mit den neu ermittelten Sollwerten geführt werden. Optimierende Eingriffe des Teigmeisters können jederzeit durch entsprechende Betätigung der Umschalter $T_1$-$T_n$ bzw. $45_1$-$45_n$ vorgenommen werden. Entscheidend für dieses Vorgehen ist es, daß gleichzeitig mit der Fixierung der Sollwertschemata für die Verfahrensparameter gleichzeitig die dazugehörigen Schemata der Eingangsparameter — wie Leistung — (kg/h), Art und Mischung des Rohmaterials (Durum-, Hart- und/oder Weichweizen), Wasserzugabe und verschiedene Zusätze (Ei, Salz usw.) — sowie die Parameter der Produktqualität (Feuchtigkeit, Farbe, Festigkeit usw.) zugeordnet werden.

Sind nun alle Parameter im Hinblick auf Eingang und Ausgang der Ware sowie sämtliche Parameter bezüglich der Verfahrensführung ermittelt und im Sollwertspeicher erfaßt, nun bei der Wiederholung derselben Produktqualität, so können die letztmalig als optimal ermittelten Sollwerte für die neue Produktion zugrundegelegt bzw. abgerufen werden. Dies gilt für das Anfahr-, Produktions- sowie Ausfahrdiagramm. Der Teigmeister kann somit auf einer wesentlich sicheren Stufe die Langwarenlinie führen, wobei die Rechnermittel, die Regler sowie auch die Meßgeräte wertvolle Hilfsmittel sind. Er kann jederzeit an jeder Stelle unter Ausscheidung der elektronischen Automatikmittel an speziellen Orten das Verfahren mit Hand steuern oder aber die Anlage für längere Zeitabschnitte ihrem eigenen automatischen Lauf überlassen. In besonderen Situationen oder Notfällen kann der Teigmeister die gesamte Anlage ohne Verknüpfung der Verfahrenszonen über Rechnermittel selbst im halbautomatischen Betrieb führen. Dabei ist es wesentlich, daß er sich auf die Anlagesteuerung und Verriegelung stützen kann.

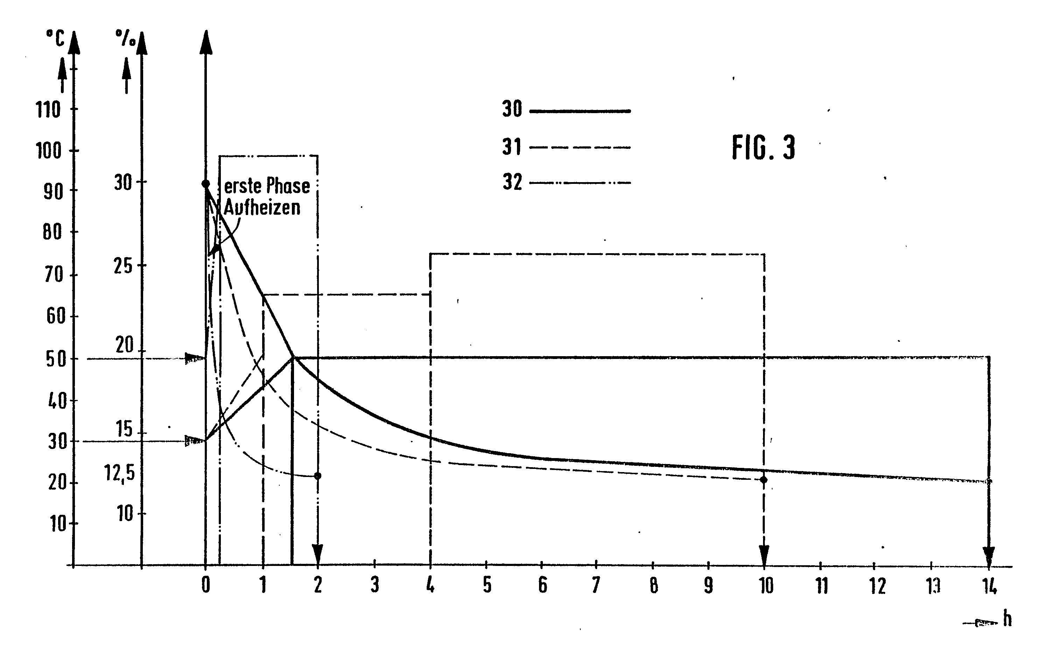

Die einzelnen Kurven der Figur 3 lassen sich wie folgt deuten : beim alten System werden die Langwaren im Mittel etwa 14 und mehr Stunden bei 50 °C und beim praktizierten Stand der Technik 10 h mit mittlerer Temperatur von 65 bis 75 °C getrocknet. Mit dem erfindungsgemäßen Verfahren läßt sich eine Trocknungsdauer von 1 bis 3 1/2 h bei einer mittleren Temperatur von 95 °C erreichen. Besonders auffallend kommt dabie der sehr starke Abfall der Produktfeuchtigkeit beim erfindungsgemäßen Verfahren im Gegensatz zu den klassischen Systemen zum Ausdruck. Dies kann darauf zurückzuführen sein, daß beim erfindungsgemäßen Verfahren während der Trocknung ein ein- oder mehrmaliges Verkrusten der Oberfläche der Teigware bzw. der Langware vermieden wird und die Teigstränge der Langware im noch preßweichen und nicht ausplastifizierten Zustand unmittelbar in einen vollständing plastifizierten Zustand überführt und darin bis zum Ablauf der Trocknungsmaßnahme in der zweiten aufgeheizten Klimazone gehalten werden. In diesem plastischen Zustand kann offensichtlich die Wasseraustreibung überraschend schnell erfolgen.

## Patentansprüche

1. Verfahren zur Herstellung von Langwaren eines Feuchtigkeitsgehaltes von weniger als 14 Gew.-%, insbesondere von 11 bis 13 Gew.-%, wobei die einen Pressenkopf in Form von weichen, feucht-plastischen Teigsträngen verlassende Langware hängend bis zur Endtrocknung durch unterschiedlich aufgeheizte Klimazonen geführt und die Langware nach Abschluß des Trocknungsvorganges in einer weiteren Klimazone abgekühlt und/oder formstabilisiert wird, dadurch gekennzeichnet, daß die den Pressenkopf verlassende Langware in einer ersten Klimazone möglichst schnell, jedoch in mehr als 10 min und unter Einwirkung eines Aufheizmediums einer relativen Feuchtigkeit von 60 bis 80 % auf eine Temperatur von mehr als 80 °C aufgeheizt und darauf in einer zweiten Klimazone unter Einwirkung eines Trocknungsmediums einer Temperatur von über 80 °C und einer relativen Feuchtigkeit von etwa 65 bis 85 % auf eine Feuchtigkeit von weniger als 14 Gew.-% oder zur Vermeidung unerwünschter Reaktionen über 80 °C zunächst auf einen Feuchtigkeitsgehalt von weniger als 18 Gew.-% und anschließend bei einer niedrigeren Temperatur auf die Endfeuchtigkeit von weniger als 14 Gew.-% getrocknet wird.

2. Verfahren nach Anspruch 1, dadurch gekennzeichnet, daß die Langware in der ersten Klimazone 15 bis 60 min lang bei einer relativen Feuchtigkeit des Aufheizmediums von 65 bis 75 % aufgeheizt wird.

3. Verfahren nach Anspruch 1 oder 2, dadurch gekennzeichnet, daß die Langware in der zweiten Klimazone 30 bis 120 min lang bei einer relativen Feuchtigkeit des Trocknungsmediums von 70 bis 80 % getrocknet wird.

4. Verfahren nach einem der Ansprüche 1 bis 3, dadurch gekennzeichnet, daß die Langware in der ersten Klimazone im Verlaufe eines oder mehrerer Temperatursprünge aufgeheizt wird.

5. Verfahren nach einem der Ansprüche 1 bis 4, dadurch gekennzeichnet, daß die Langware im wesentlichen in einer Etage durch eine Bewegung in Längsrichtung durch die verschiedenen Klimazonen geführt wird.

6. Verfahren nach einem der Ansprüche 1 bis 5, dadurch gekennzeichnet, daß mittels eines Turbosystemes Frischluft in den Langwarentrockner eingeblasen wird.

7. Verfahren nach Anspruch 5, dadurch gekennzeichnet, daß die Luftströmung in den verschiedenen Klimazonen abschnittsweise senkrecht zu den Langwaren gerichtet ist und ein Teil der Luft im Sinne eines Turbosystems durch innerhalb und außerhalb des Trocknungsraumes geführte Kanäle zur Steuerung des Klimas der einzelnen Klimazonen eingeleitet und abgeführt wird.

8. Verfahren nach einem der Ansprüche 1 bis 7, insbesondere zur Herstellung von Teigwaren mit temperaturinstabilen Komponenten, Eizusätzen, Milchproteinen und anderen Rohfaserzusätzen usw., dadurch gekennzeichnet, daß die Langwaren in weniger als 1 h auf eine Produktfeuchtigkeit von etwa 18 % intensiv getrocknet und anschließend während 1 bis 4 h, insbesondere 2 bis 3 h und bei einer Temperatur von 65 bis 75 °C auf die Endfeuchtigkeit von weniger als 14 % gebracht wird.

9. Vorrichtung zur Herstellung bzw. zum Trocknen von Langwaren mit einer Presse (3), einer Stabbehängevorrichtung (8) sowie einem Langwarentrockner, zur Durchführung des Verfahrens nach den Ansprüchen 1 bis 8, dadurch gekennzeichnet, daß der Langwarentrockner als Einetagentrockner ausgebildet ist, der eine Schnellaufheizzone (12, 13, 14, 15, 16) sowie eine Intensivtrocknungszone (17) aufweist.

10. Vorrichtung nach Anspruch 9, dadurch gekennzeichnet, daß sowohl die Schnellaufheizzone (12, 13, 14, 15, 16) sowie die Intensivtrocknungszone (17) mit einem Umluftsystem derart ausgerüstet sind, daß die Luft senkrecht von oben nach unten bzw. von unten nach oben durch die Ware geführt wird.

11. Vorrichtung nach Anspruch 9, dadurch gekennzeichnet, daß der Langwarentrockner in den einzelnen Klimazonen der Schnellaufheizzone (12, 13, 14, 15, 16) sowie der Intensivtrocknungszone (17) Luftverdichter bzw. Ventilatoren sowie Steuer- bzw. Reglermittel aufweist.

12. Vorrichtung nach Anspruch 11, dadurch gekennzeichnet, daß das Turbosystem Mittel zur Verhinderung eines Unterdrucks bzw. Überdrucks in entsprechenden Umluftzonen aufweist.

13. Vorrichtung nach einem der Ansprüche 9 bis 12, dadurch gekennzeichnet, daß die Schnellaufheizzone (12, 13, 14, 15, 16) mindestens einen Längskanal (21) für Frischluft und mindestens einen Längskanal (23) für Abluft sowie Verbindungskanäle mit steuerbaren Drosseln (25) zur Einregulierung des Zuluft- und Abluftstromes und zur abschnittsweisen Klimasteuerung im Sinne eines Turbosystems aufweist.

14. Vorrichtung nach einem der Ansprüche 9 bis 13, dadurch gekennzeichnet, daß die Schnellaufheizzone (12, 13, 14, 15, 16) sowie die Intensivtrocknungszone (17) ein Umluftsystem für Frisch- und Abluft sowie Drossel- und Steuerklappen und des weiteren eine Aufheizvorrichtung für Frisch- und/oder Abluft aufweist.

15. Vorrichtung nach einem der Ansprüche 9 bis 14, dadurch gekennzeichnet, daß jede Klimazone der Schnellaufheizzone (12, 13, 14, 15, 16) sowie der Intensivtrocknungszone (17) mit einer von einem zentralen Computer gesteuerten Dampfbefeuchtung ausgerüstet ist.

16. Vorrichtung nach einem der Ansprüche 13 bis 14, dadurch gekennzeichnet, daß die Längskanäle (23' und 24') in jedem ventilierten Element der Intensivtrocknungszone (17) einstellbare Schieber (26) aufweisen.

17. Vorrichtung nach einem der Ansprüche 13 bis 16, dadurch gekennzeichnet, daß die Längskanäle (24) des Turbosystems für Ab- und Frischluft in der Trocknungskammer des Einetagentrockners angeordnet sind.

18. Vorrichtung nach einem der Ansprüche 13 bis 16, dadurch gekennzeichnet, daß die Luftmischaggregate, Verdichtungs- und Saugeinrichtungen des Turbosystems in den Abluft- und Frischluftkanälen innerhalb der Trocknungskammer des Einetagentrockners angeordet sind.

19. Vorrichtung nach einem der Ansprüche 13 bis 16, dadurch gekennzeichnet, daß die Zudtmischaggregate, Verdichtungs- und Saugeinrichtungen des Turbosystems in Kanälen außerhalb der Trocknungskammer angeordnet sind.

20. Vorrichtung nach einem der Ansprüche 9 bis 19, dadurch gekennzeichnet, daß die Schnellaufheizzone (12, 13, 14, 15, 16) eine oder mehrere Zonen unterschiedlicher Temperatur (Temperatursprungabschnitte) aufweist.

21. Vorrichtung nach einem der Ansprüche 9 bis 20, dadurch gekennzeichnet, daß zur Kontrolle der Ware in der Schnellaufheizzone (12, 13, 14, 15, 16) sowie der Intensivtrocknungszone (17) eine die Ware aus dem Einetagentrockner herausführende, automatische Stabentnahmevorrichtung angeordnet ist.

22. Vorrichtung nach Anspruch 21, dadurch gekennzeichnet, daß im Bereich der Schnellaufheizzone (12, 13, 14, 15, 16) und in der Intensivtrocknungszone (17) mindestens eine automatische Stabentnahmevorrichtung angeordnet ist.

23. Vorrichtung nach Anspruch 21 oder 22, dadurch gekennzeichnet, daß die Stabentnahmevorrichtung eine automatische Stabrückführung in die entsprechende Zone aufweist.

24. Vorrichtung nach einem der Ansprüche 21 bis 23, dadurch gekennzeichnet, daß die automatische Stabentnahmevorrichtung Produkt-Meßgeräte bzw. Überwachungsgeräte für die Produkqualität sowie zur Überwachung bzw. Steuerung und Regelung der Trocknungsparameter (Klima) aufweist.

25. Vorrichtung nach Anspruch 9, dadurch gekennzeichnet, daß die Stabbehängevorrichtung (8) der Schnellaufheizzone (12, 13, 14, 15, 16) unmittelbar vorgelagert oder als Teil der Schnellaufheizzone ausgebildet ist.

26. Vorrichtung nach einem der Ansprüche 9 bis 25, dadurch gekennzeichnet, daß das Klima der verschiedenen Abschnitte der Schnellaufheizzone (12, 13, 14, 15, 16) und der Intensivtrocknungszone (17) von einem zentralen Computer überwacht, registriert und gesteuert wird.

27. Vorrichtung zur Herstellung bzw. zum Trocknen von Langwaren nach Anspruch 9 mit

a) jeweils mehrere Anlageelemente umfassenden Verfahrenszonen für eine Rohmaterialvorbereitung und Dosierung, eine Teigbereitung mit Mischer und Presse, eine Schnellaufheizung, eine Intensivtrocknung sowie für die Endverarbeitung mit Stabilisierung, Lagerung und Verpackung ;

b) einer Einrichtung mit Steuermitteln, die zur selbständigen Steuerung, einschließlich wechselseitiger Verriegelung von Anlageelementen ausgelegt sind,

dadurch gekennzeichnet, daß die Einrichtung mit Reglern nebst zugeordneten Sollwertgebern, Vergleichern und Ist-Wert-Fühlern zur Regelung der Anlageelemente ausgestattet ist, wobei den Steuermitteln eine Baugruppe mit mehreren Reglern übergeordnet ist, die Stellglieder der Steuermittel zusätzlich für eine Ansteuerung durch die Reglerbaugruppe ausgelegt sind und die Regler mittels erstem Umschalter den Steuermitteln zuschaltbar sind.

28. Vorrichtung nach Anspruch 27, dadurch gekennzeichnet, daß die einzelnen Regelkreise der Regler (40$_1$-40$_n$) voneinander unabhängig sind.

29. Vorrichtung nach Anspruch 27 oder 28, dadurch gekennzeichnet, daß wenigstens ein Regler (40$_1$-40$_n$) einen externen, von Hand (T-Tn) steuerbaren Sollwertgeber (41-41$_n$) aufweist.

30. Vorrichtung nach Anspruch 29 mit wenigstens einem Meßgerät (42$_F$-42$_n$) zur Ermittlung operativer Verfahrensparameter (T, RF, O) dadurch gekennzeichnet, daß der Steuereingang (Adressenleitung) des Sollwertgebers (41$_1$-41$_n$) mit den Signalausgang des Meßgerätes (42$_1$-42$_n$) verbindbar ist.

31. Vorrichtung nach einem der Ansprüche 27 bis 30, dadurch gekennzeichnet, daß die Baugruppe (44$_1$-44$_n$) einen mehreren Reglern (40$_1$-40$_n$) gemeinsam übergeordneten und mittels zweitem Umschalter (45$_1$-45$_n$) den Reglern (40$_1$-40$_n$) zur Sollwertvorgabe zuschaltbaren Sollwertspeicher (46) aufweist.

32. Vorrichtung nach Anspruch 31, dadurch gekennzeichnet, daß pro Verfahrenszone jeweils ein Sollwertspeicher (46) vorgesehen ist.

33. Vorrichtung nach Anspruch 31 oder 32, dadurch gekennzeichnet, daß der Sollwertspeicher (46) pro Verfahrenszone mit abgeschlossenen, zusammenhängenden Sollwert-Schemata besetzbar und schemaweise adressier- und lesbar ist, wobei jedes Sollwertschema einem Satz vorgegebener Verfahrensparameter entspricht.

34. Vorrichtung nach einem der Ansprüche 31 bis 33, dadurch gekennzeichnet, daß die Regler-Baugruppe (44$_1$-44$_n$) einen Hauptrechner (Prozessor) (47) aufweist, dessen Steuerausgänge mit den Adressen-Eingängen des Sollwertspeichers (46) verbindbar sind.

35. Vorrichtung nach Anspruch 34, dadurch gekennzeichnet, daß zumindest ein Teil der Steuereingänge des Hauptrechners (47) mit den Signalausgängen der Meßgeräte (42$_1$-42$_n$) verbindbar ist.

36. Vorrichtung nach einem der Ansprüche 27 bis 35, dadurch gekennzeichnet, daß zum Einschreiben neuer Sollwerte die (Schreib-) Eingänge der Sollwertgeber bzw. -speicher (46) mit den Signalausgängen der Ist-Wert-Fühler über Signalleitungen (S$_1$-$_n$ ; S) verbindbar sind.

37. Vorrichtung nach einem der Ansprüche 27 bis 36, dadurch gekennzeichnet, daß wenigstens ein Sollwertgeber als Sollwertsteller zur Vorgabe einer Führungsgröße ausgebildet ist.

## Claims

1. Process for producing long pasty products with a moisture content of less than 14 % by weight and in particular from 11 to 13 % by weight, the long pasty product leaving a press head in the form of soft, moist-plastic dough strands are guided in suspended manner through differently heated climatic zones up to final drying and at the end of the drying process the long pasty product is cooled in a further climatic zone and/or dimensionally stabilized, characterized in that the long pasty product leaving the press head is heated as rapidly as possible in a first climatic zone, but in more than 10 minutes and under the action of a heating medium with a relative moisture content of 60 to 80 % to a temperature of more than 80 °C and is then dried in a second climatic zone under the action of a drying medium with a temperature of over 80 °C and a relative moisture content of approximately 65 to 85 % to a moisture content of less than 14 % or, to avoid undesired reactions over 80 °C, initially to a moisture content of less than 18 % by weight and then at a lower temperature to the final moisture content of less than 14 % by weight.

.2. Process according to claim 1, characterized in that the long pasty product is heated in the first climatic zone for 15 to 60 minutes in the case of a relative moisture content of the heating medium of 67 to 75 %.

3. Process according to claims 1 or 2, characterized in that the long pasty product is dried in the second climatic zone for 30 to 120 minutes in the case of a relative moisture content of the drying medium of 70 to 80 %.

4. Process according to one of the claims 1 to 3, characterized in that long pasty product is heated in the first climatic zone during one or more temperature jumps.

5. Process according to one of the claims 1 to 4, characterized in that the long pasty product is guided substantially in one stage through a movement in the longitudinal direction through the different climatic zones.

6. Process according to one of the claims 1 to 5, characterized in that fresh air is blown into the long pasty product dryer by means of a turbo system.

7. Process according to claim 5, characterized in that the air flow in the different climatic zones is directed sectionwise at right angles to the long pasty products and part of the air is introduced and removed in the sense of a turbo system by ducts located inside and outside the drying zone for controlling the climatic conditions of the individual climatic zones.

8. Process according to one of the claims 1 to 7, particularly for producing pasty products with temperature-unstable components, egg additives, milk proteins and other raw or crude fibre additives, etc., characterized in that the long pasty products are intensively dried in less than 1 hour to a product moisture content of approximately 18 % and then for 1 to 4 hours, particularly 2 to 3 hours and at a temperature of 65 to 75 °C to the final moisture content of less than 14 %.

9. Apparatus for producing or drying long products with a press (3), a bar attachment means (8) and a long pasty product drier, for performing the process according to claims 1 to 8, characterized in that the long pasty product dryer is constructed as a single-stage dryer, which has a rapid heating zone (12, 13, 14, 15, 16) and an intensive drying zone (17).

10. Apparatus according to claim 9, characterized in that both the rapid heating zone (12, 13, 14, 15, 16) and the intensive drying zone (17) are equipped with an air circulation system, in such a way that the air is guided vertically from top to bottom or from bottom to top through the product.

11. Apparatus according to claim 9, characterized in that the long pasty product dryer in the individual climatic zones of rapid heating zone (12, 13, 14, 15, 16) and the intensive drying zone (17) has air compressors or fans, as well as control and regulating means.

12. Apparatus according to claim 11, characterized in that the turbo system has means for preventing an overpressure or vacuum in corresponding air circulation zones.

13. Apparatus according to one of the claims 9 to 12, characterized in that the rapid heating zone (12, 13, 14, 15, 16) has at least one longitudinal duct (21) for fresh air and at least one longitudinal duct (23) for exhaust air, as well as connecting ducts with controllable restrictors (25) for regulating the supply air and exhaust air flow and for the sectionwise climatic control in the sense of a turbosystem.

14. Apparatus according to one of the claims 9 to 13, characterized in that the rapid heating zone (12, 13, 14, 15, 16) and the intensive drying zone (17) has a circulating air system for fresh and exhaust air, as well as restricting and control flaps, together with a heating means for fresh and/or exhaust air.

15. Apparatus according to one of the claims 9 to 14, characterized in that each climatic zone of the rapid heating zone (12, 13, 14, 15, 16) and the intensive drying zone (17) is equipped with a steam humidifying system controlled by a central computer.

16. Apparatus according to one of the claims 13 to 14, characterized in that the longitudinal ducts (23' and 24') in each ventilated element of the intensive drying zone (17) have adjustable slides (26).

17. Apparatus according to one of the claims 13 to 16, characterized in that the longitudinal ducts (24) of the turbo system for exhaust and fresh air are arranged in the drying chamber of the single-stage dryer.

18. Apparatus according to one of the claims 13 to 16, characterized in that the air mixing unit, compression and suction means of the turbo system are arranged in the spent and fresh air ducts within the drying chamber of the single-stage dryer.

19. Apparatus according to one of the claims 13 to 16, characterized in that the air mixing units, compression and suction means of the turbo system are arranged in ducts outside the drying chamber.

20. Apparatus according to one of the claims 9 to 19, characterized in that the rapid heating zone (12, 13, 14, 15, 16) has one or more zones at different temperatures (temperature jump sections).

21. Apparatus according to one of the claims 9 to 20, characterized in that for checking the product in the rapid heating zone (12, 13, 14, 15, 16) and the intensive drying zone (17) an automatic bart removal means is provided which brings the product out of the single-stage dryer.

22. Apparatus according to claim 21, characterized in that in the vicinity of the rapid heating zone (12, 13, 14, 15, 16) and in the intensive drying zone (17) is provided at least one automatic bar removal means.

23. Apparatus according to claims 21 or 22, characterized in that the bar removal means has an automatic bar return to the corresponding zone.

24. Apparatus according to one of the claims 21 to 23, characterized in that the automatic bar removal means has product measuring or monitoring means for the quality thereof, as well as for monitoring or controlling and regulating the drying parameters (climatic conditions).

25. Apparatus according to claim 9, characterized in that the bar attachment means (8) is positioned directly upstream of the rapid heating zone (12, 13, 14, 15, 16) or forms part of the latter.

26. Apparatus according to one of the claims 9 to 25, characterized in that the climatic conditions of the different sections of the rapid heating zone (12, 13, 14, 15, 16) and the intensive drying zone (17) are monitored, recorded and controlled from a central computer.

27. Apparatus for producing or drying long pasty products according to claim 9 with

a) process zones in each case having several plant components for a raw material processing and dosing, dough preparation with mixer and press, rapid heating, intensive drying, as well as for final processing with stabilization, storage and packing ;

b) a device with control means designed for automatic control, including mutual locking of plant components, characterized in that the device is equipped with regulators, as well as associated set point devices, comparators and actual value sensors for the regulating the plant components, a subassembly with several regulators being superimposed on the control means, the control elements of the control means being additionally designed for controlling the regulator subassembly and the regulators can be connected into the control means by means of first changeover switches.

28. Apparatus according to claim 27, characterized in that the individual control loops of the regulators $(40_1\text{-}40_n)$ are independent of one another.

29. Apparatus according to claims 27 or 28, characterized in that at least one regulator $(40_1\text{-}40_n)$ has an external manually (T-Tn) controllable set point device $(41\text{-}41_n)$.

30. Apparatus according to claim 29, with at least one measuring device $(42_1\text{-}42_n)$ for determining operative process parameters (T, RF, O), characterized in that the control input (address line) of the set point device $(41_1\text{-}41_n)$ can be connected to the signal output of the measuring device $(42_1\text{-}42_n)$.

31. Apparatus according to one of the claims 27 to 30, characterized in that the subassembly $(44_1\text{-}44_n)$ has a set value store (46) jointly superimposed on several regulators $(40_1\text{-}40_n)$ and by means of second changeover switches $(45_1\text{-}45_n)$ can be connected into the regulators $(40_1\text{-}40_n)$ for giving the set point.

32. Apparatus according to claim 31, characterized in that there is in each case one set point store (46) for each process zone.

33. Apparatus according to claims 31 or 32, characterized in that the set point store (46) per process zone can be occupied with closed, continuous set point diagrams and is diagrammatically addressable and readable, each set point diagram corresponding to a set of given process parameters.

34. Apparatus according to one of the claims 31 to 33, characterized in that the regulator subassembly $(44_1\text{-}44_n)$ has a main computer (processor) (47), whose control outputs can be connected to the address inputs of the set point store (46).

35. Apparatus according to claim 34, characterized in that at least part of the control inputs of the main computer (47) can be connected to the signal outputs of the measuring device $(42_1\text{-}42_n)$.

36. Apparatus according to one of the claims 27 to 35, characterized in that for writing in new set points the writing inputs of the set point device or store (46) can be connected to the signal outputs of the actual value sensor via signal lines $(S_{1\text{-}n} ; S)$.

37. Apparatus according to one of the claims 27 to 36, characterized in that at least one set point device is constructed as a set point station for giving a control variable.

**Revendications**

1. Procédé de fabrication de pâtes longues d'une teneur en humidité de moins de 14 % en poids, en particulier de 11 à 13 % en poids, la pâte longue qui quitte une tête d'extrusion sous la forme de cordons de pâte mous, à l'état plastique humide, étant amenée en étant suspendue jusqu'au séchage final en passant par des zones climatisées chauffées différemment, et la pâte longue étant refroidie et/ou sa forme étant stabilisée une fois le processus de séchage achevé, caractérisé en ce que la pâte longue quittant la tête d'extrusion étant chauffée dans une première zone climatique le plus rapidement possible, mais en plus de 10 minutes et sous l'action d'un fluide de chauffage d'une humidité relative de 60 à 80 % à une température de plus de 80 °C et étant ensuite séchée dans une seconde zone climatique sous l'action d'un fluide de séchage d'une température supérieure à 80 °C et d'une humidité relative d'environ 65 à 85 % jusqu'à obtention d'une teneur en humidité inférieure à 14 % en poids ou, pour éviter des réactions fâcheuses au-dessus de 80 °C, étant d'abord séchée jusqu'à obtention d'une teneur en humidité de moins de 18 % en poids, puis, à une température inférieure, jusqu'à obtention d'une teneur en humidité finale de moins de 14 % en poids.

2. Procédé selon la revendication 1, caractérisé en ce que la pâte longue est chauffée dans une première zone climatisée pendant 15 à 60 minutes avec une humidité relative du fluide de chauffage de 65 à 75 %.

3. Procédé selon la revendication 1 ou 2, caractérisé en ce que la pâte longue est séchée dans la seconde zone climatisée 30 à 120 minutes à une humidité relative du fluide de séchage de 70 à 80 %.

4. Procédé selon l'une des revendications 1 à 3, caractérisé en ce que la pâte longue est chauffée dans la première zone climatisée en subissant un ou plusieurs sauts de température.

5. Procédé selon l'une des revendications 1 à 4, caractérisé en ce que la pâte longue est guidée pratiquement dans un étage par un mouvement en direction longitudinale à travers les différentes zones climatisées.

6. Procédé selon l'une des revendications 1 à 5, caractérisé en ce que de l'air frais est insufflé dans le sécheur de pâtes longues au moyen d'un turbosystème.

7. Procédé selon la revendication 5, caractérisé en ce que le courant d'air est dirigé, dans les différentes zones climatisées, par sections, perpendiculairement aux pâtes longues et une partie de l'air est introduit et évacué, à la façon d'un turbosystème, par des canaux passant à l'intérieur et à l'extérieur de la chambre de séchage, pour régler l'atmosphère des différentes zones climatisées.

8. Procédé selon l'une des revendications 1 à 7, en particulier pour fabriquer des pâtes à composants thermiquement instables, additifs à base d'œuf, lactoprotéines et autres additifs de fibres crues, etc., caractérisé en ce que les pâtes longues sont séchées intensivement en moins d'une heure jusqu'à obtention d'une teneur en humidité du produit d'environ 18 %, puis pendant 1 à 4 heures, en particulier 2 à 3 heures, et à une température de 65 à 75 °C, jusqu'à obtention de la teneur en humidité finale de moins de 14 %.

9. Dispositif pour fabriquer ou pour sécher des pâtes longues comportant une presse (3), un dispositif de suspension à barres (8) ainsi qu'un sécheur de pâtes longues, pour mettre en œuvre le procédé selon les revendications 1 à 8, caractérisé en ce que le sécheur de pâtes longues est réalisé sous la forme d'un sécheur à un étage qui comporte une zone de chauffage rapide (12, 13, 14, 15, 16), ainsi qu'une zone de séchage intensif (17).

10. Dispositif selon la revendication 9, caractérisé en ce que la zone de chauffage rapide (12, 13, 14, 15, 16), ainsi que la zone de séchage intensif (17), comportent un système de circulation d'air de telle façon que l'air est guidé de haut en bas ou de bas en haut à travers le produit.

11. Dispositif selon la revendication 9, caractérisé en ce que le sécheur de pâtes longues comporte dans les différentes zones climatisées de la zone de chauffage rapide (12, 13, 14, 15, 16)

ainsi que de la zone de séchage intensif (17) des compresseurs d'air ou des ventilateurs, ainsi que des moyens de commande ou de réglage.

12. Dispositif selon la revendication 11, caractérisé en ce que le turbosystème comporte des moyens pour empêcher une dépression ou une surpression dans des zones de circulation d'air correspondantes.

13. Dispositif selon l'une des revendications 9 à 12, caractérisé en ce que la zone de chauffage rapide (12, 13, 14, 15, 16) comporte au moins un canal longitudinal (21) pour de l'air frais et au moins un canal longitudinal (23) pour de l'air d'évacuation, ainsi que des canaux de liaison comportant des étrangleurs réglables (25) pour réguler le courant d'air d'amenée et d'air d'évacuation et pour effectuer la climatisation par sections à la façon d'un turbosystème.

14. Dispositif selon l'une des revendications 9 à 13 caractérisé en ce que la zone de chauffage rapide (12, 13, 14, 15, 16), ainsi que la zone de séchage intensif (17), comportent un système de circulation d'air pour de l'air frais et de l'air d'évacuation, ainsi que des clapets d'étranglement et de commande et, en outre, un dispositif de chauffage pour de l'air frais et/ou de l'air d'évacuation.

15. Dispositif selon l'une des revendications 9 à 14, caractérisé en ce que chaque zone climatisée de la zone de chauffage rapide (12, 13, 14, 15, 16), ainsi que de la zone de séchage intensif (17), comporte un humidificateur de vapeur commandé par un calculateur central.

16. Dispositif selon l'une des revendications 13 à 14, caractérisé en ce que les canaux longitudinaux (23' et 24') comportent, dans chaque élément ventilé de la zone de séchage intensif (17), des tiroirs réglables (26).

17. Dispositif selon l'une des revendications 13 à 16, caractérisé en ce que les canaux longitudinaux (24) du turbosystème pour l'air d'évacuation et l'air frais sont disposés dans la chambre de séchage du sécheur à un étage.

18. Dispositif selon l'une des revendications 13 à 16, caractérisé en ce que les agrégats de mélange d'air, les dispositifs de compression et d'aspiration du turbosystème sont disposés dans les canaux d'air d'évacuation et d'air frais à l'intérieur de la chambre de séchage du sécheur à un étage.

19. Dispositif selon l'une des revendications 13 à 16, caractérisé en ce que les agrégats de mélange d'air, les dispositifs de compression et d'aspiration du turbosystème sont disposés dans des canaux à l'extérieur de la chambre de séchage.

20. Dispositif selon l'une des revendications 9 à 19, caractérisé en ce que la zone de chauffage rapide (12, 13, 14, 15, 16) comporte une ou plusieurs zones de températures différentes (sections de discontinuité de température).

21. Dispositif selon l'une des revendications 9 à 20, caractérisé en ce que, pour contrôler le produit, on prévoit dans la zone de chauffage rapide (12, 13, 14, 15, 16), ainsi que dans la zone de chauffage intensif (17), un dispositif de prélèvement de barres automatique retirant le produit du sécheur à un étage.

22. Dispositif selon la revendication 21, caractérisé en ce qu'au moins un dispositif de prélèvement de barres automatique est prévu dans la région de la zone de chauffage rapide (12, 13, 15, 16) et dans la zone de séchage intensif (17).

23. Dispositif selon la revendication 21 ou 22, caractérisé en ce que le dispositif de prélèvement de barres comporte un dispositif automatique pour ramener les barres dans la zone correspondante.

24. Dispositif selon l'une des revendications 21 à 23, caractérisé en ce que le dispositif de prélèvement de barres automatique comporte des appareils de mesure du produit ou des appareils de contrôle pour la qualité du produit, ainsi que pour contrôler ou régler et réguler les paramètres de séchage (climatisation).

25. Dispositif selon la revendication 9, caractérisé en ce que le dispositif de suspension à barres (8) de la zone de chauffage rapide (12, 13, 14, 15, 16) est placé directement avant ou est réalisé sous la forme d'une partie de la zone de chauffage rapide.

26. Dispositif selon l'une des revendications 9 à 25, caractérisé en ce que l'atmosphère des différentes sections de la zone de chauffage rapide (12, 13, 14, 15, 16) et de la zone de séchage intensif (17) est contrôlée, enregistrée et réglée par un calculateur central.

27. Dispositif de fabrication ou de séchage de pâtes longues selon la revendication 9, comportant

a) des zones opératoires comprenant chacune plusieurs éléments d'installation pour une préparation de matière première et un dosage, une préparation de pâte avec un mélangeur et une presse, un chauffage rapide, un séchage intensif, ainsi que pour le traitement final avec stabilisation, stockage et emballage ;

b) un dispositif comportant des moyens de commande conçus pour une commande autonome, y compris le verrouillage mutuel d'éléments d'installation,

caractérisé en ce que ledit dispositif comporte des dispositifs de réglage en plus de transmetteurs de valeurs prescrites correspondants, de comparateurs et de capteurs de valeurs instantanées pour la régulation des éléments d'installation, un module comportant plusieurs dispositifs de réglage ayant sous sa dépendance les moyens de commande, les organes de réglage des moyens de commande étant conçus en plus pour être activés par le module de dispositifs de réglage et les dispositifs de réglage pouvant être reliés aux moyens de commande grâce à un premier commutateur.

28. Dispositif selon la revendication 27, caractérisé en ce que les différents circuits de réglage des dispositifs de réglage ($40_1$-$40_n$) sont indépendants les uns des autres.

29. Dispositif selon la revendication 27 ou 28, caractérisé en ce qu'au moins un dispositif de réglage ($40_1$-$40_n$) comporte un transmetteur de valeurs prescrites externe ($41$-$41_n$) pouvant être commandé manuellement ($T$-$T_n$).

30. Dispositif selon la revendication 29 comportant au moins un appareil de mesure ($42_F$-$42_n$) pour déterminer des paramètres opératoires du procédé ($T$, $RF$, $O$), caractérisé en ce que l'entrée de commande (ligne d'adresses) du transmetteur de valeurs prescrites ($41_1$-$41_n$) peut être reliée à la sortie de signaux de l'appareil de mesure ($42_1$-$42_n$).

31. Dispositif selon l'une des revendications 27 à 30, caractérisé en ce que le module ($44_1$-$44_n$) comporte une mémoire de valeurs prescrites (46) ayant sous sa dépendance en même temps plusieurs dispositifs de réglage ($40_1$-$40_n$) et pouvant être reliée aux dispositifs de réglage ($40_1$-$40_n$) pour l'attribution de valeurs prescrites au moyen d'un second commutateur ($45_1$-$45_n$).

32. Dispositif selon la revendication 31, caractérisé en ce qu'il est prévu une mémoire de valeurs prescrites (46) par zone opératoire.

33. Dispositif selon la revendication 31 ou 32, caractérisé en ce que la mémoire de valeurs prescrites (46) correspondant à chaque zone opératoire peut être occupée avec des schémas de valeurs prescrites contigus délimités et peut être adressée et lue selon le schéma, chaque schéma de valeurs prescrites correspondant à une série de paramètres opératoires prédéterminés.

34. Dispositif selon l'une des revendications 31 à 33, caractérisé en ce que le module de dispositifs de réglage ($44_1$-$44_n$) comporte un calculateur principal (processeur) (47) dont les entrées de commande peuvent être reliées à des entrées d'adresses de la mémoire de valeurs prescrites (46).

35. Dispositif selon la revendication 34, caractérisé en ce qu'une partie au moins des entrées de commande du calculateur principal (47) peut être reliée aux sorties de signaux des appareils de mesure ($42_1$-$42_n$).

36. Dispositif selon l'une des revendications 27 à 35, caractérisé en ce que, pour introduire de nouvelles valeurs prescrites, les entrées (d'écriture) des transmetteurs de valeurs prescrites ou des mémoires de valeurs prescrites (46) peuvent être reliées aux sorties de signaux des capteurs de valeur instantanée par des lignes de transmission de signaux ($S_{1-n}$ ; $S$).

37. Dispositif selon l'une des revendications 27 à 36, caractérisé en ce qu'au moins un transmetteur de valeurs prescrites est réalisé sous la forme d'un dispositif de réglage de valeurs prescrites pour prescrire une grandeur de guidage.

FIG. 1

FIG. 2

0 129 892

FIG. 3

30 ——————
31 ---------
32 -·-··-··-

erste Phase Aufheizen

0 129 892

FIG.4

FIG. 5

0 129 892